# EUROPEAN PATENT SPECIFICATION

(11) **EP 3 397 440 B1**
(45) Date of publication and mention of the grant of the patent: **01.02.2023**
(21) Application number: 16882719.4
(22) Date of filing: 29.12.2016
(51) Int. Cl.: B29B 9/16, B29B 9/12, B29B 13/04, B29B 13/06, B01J 20/24, B01J 20/30, A01K 1/015, B29B 9/06, B29C 48/00, B29C 48/04

(54) **SYSTEM AND METHOD FOR POST-PROCESSING OF EXTRUDED GRANULAR ABSORBENT**
SYSTEM UND VERFAHREN ZUM NACHVERARBEITEN VON EXTRUDIERTEM GRANULAREM ABSORBENS
SYSTÈME ET PROCÉDÉ DE POST-TRAITEMENT D'ABSORBANT GRANULAIRE EXTRUDÉ

(30) Priority: 29.12.2015 US 201562272352 P
(43) Date of publication of application: 07.11.2018
(73) Proprietor: Pioneer Pet Products, LLC, Cedarburg, WI 53012 (US)
(72) Inventor: LIPSCOMB, John M., Cedarburg, WI 53012 (US); RODRIGUEZ, Omar I., Cedarburg, WI 53012 (US); BERGE, Chad, C., Menomonee Falls, WI 53051 (US)
(74) Representative: Hübner, Gerd
(86) International application number: PCT/US2016/069355
(87) International publication number: WO 2017/117476

(56) References cited:
- WO-A1-2015/112961
- WO-A1-2015/113006
- JP-B2- 3 061 326
- JP-B2- 3 415 036
- US-A- 5 062 954
- US-A- 5 942 170
- US-A1- 2005 005 869
- US-A1- 2011 204 166
- US-A1- 2013 026 412
- US-A1- 2015 123 303
- US-A1- 2015 145 164

## Description

### FIELD

The present invention is directed to a system and method for making extruded granular absorbent where post-extrusion cold-processing of the extruded granular absorbent is performed, and more particularly to such a system and method where extruded granular absorbent is cold-processed by cooling and drying the extruded granular absorbent before post-extrusion processing is performed with the cold-processing of the extruded granular absorbent helping maintain the as-extruded state of starches in the extruded granular absorbent during and after post-extrusion processing.

### BACKGROUND

The closest prior art is defined by US 2013/026412 A1 which discloses a system for post-extrusion processing of extruded absorbents, comprising an extruder, an absorbent particle cooling and drying subsystem for cooling and drying the pellets after extrusion without raising the temperature of the extruded pellets, an absorbent particle processing subsystem for processing the pellets after extrusion, cooling and drying of the pellets has been performed, wherein the absorbent particle processing subsystem is comprised of a post-extrusion pellet processing machine that processes the cooled and dried extruded pellets in a manner that reduces extruded pellet particle size.

JP 3 415036 B2 discloses a method for making a water-containing gel-like crosslinked polymer granules, capable of carrying out uniform pulverization without applying mechanical outer force to the water-containing gel-like crosslinked polymer in pulverizing treatment of the water-containing gel-like crosslinked polymer using a screw type extruder. The water-containing gel-like crosslinked polymer is pulverized by using a screw type extruder in which a turning back-preventing member for preventing the water-containing gel-like crosslinked polymer from turning back onto the side of supply port is provided in the vicinity of extruding port. A belt-like projection spirally formed in the inner surface of a casing is preferable as the turning back-preventing member. Thereby, the water-containing gel-like crosslinked polymer can efficiently and favorably be pulverized without hindering the rotating of a screw.

While many attempts have been made in the past to produce granular absorbent through extrusion of starch-containing material, very few have been commercially successful to date.

This includes past efforts to produce an extruded granular absorbent well suited for use as animal, pet or cat litter.

Examples of such prior efforts to make extruded litter are disclosed in Sotillo, U.S. Patent No. 6,220,206 ("'206 patent"), Fuchshuber, U.S. Patent Application Publication No. US 20100269758 A1 ("'758 publication", and Dixon et al., U.S. Patent Application Publication No. US 20110185977 A1 ("'977 publication"). While each reference discloses a method of making extruded granular absorbent that purports to be suitable for use as cat, pet or animal litter, post-extrusion conditions including post-extrusion processing disclosed in each reference adversely affects one or more characteristics and/or properties of the litter undesirably adversely impacting performance of the litter.

The '206 patent discloses extruding an admixture composed of grain milling byproducts containing enough starch to form at least 30% gelatinized starch in each extruded pellet during pellet during extrusion with the gelatinized starch serving as a binder that keeps each extruded pellet from breaking apart. After extrusion, the '206 patent further discloses milling of the extruded pellets using a hammer mill into smaller particles with at least two different particle sizes that have a rough surface to enhance absorption by increasing the amount of the surface area available to absorb animal urine. Milling of the extruded pellets is done prior to drying them to minimize creation of dust. After milling, the '206 patent further teaches drying the extruded particles using heated air having a temperature of greater than 100 degrees Celsius until moisture content is reduced to between about 2% and about 10% by weight.

Unfortunately, even where post-extrusion milling of the extruded pellets is not performed, drying the pellets using heated air having a temperature greater than 100 degrees Celsius relatively rapidly retrogrades starch in the pellets reducing urine absorption capacity. Where hammer milling is performed before drying while the pellets are still moist to minimize dusting, post-extrusion hammer milling of the pellets not only physically modifies starch in a manner that reduces absorption, but hammer milling also simultaneously heats up the pellets thermally modifying starch in a manner causing absorption-reducing retrogradation. Absorption is even further reduced during hot air drying after hammer milling because of additional starch retrogradation taking place. The result is that post-extrusion processing performed in carrying out the litter making method disclosed in the '206 patent intended to enhance absorption actually has the unintended opposite effect of undesirably reducing absorption. The same is true with respect to any alleged or purported ability of litter of the '206 patent to form lumps when wetted.

The `758 publication discloses a somewhat similar litter making method where whole cereal grains are ground before being extruded into spheres which are then cooled using a cooler before being ground up using a roll mill to form an absorbing material purportedly suitable for use as animal litter. Though the spheres are cooled after extrusion before grinding them into absorbing material composed of smaller size particles using a roll mill, the relatively high moisture content of the spheres can lead to post-extrusion retrogradation of starch in the spheres which in turn can adversely impact the absorbing material formed of the ground spheres by reducing absorption and preventing clumping. Despite the spheres being cooled prior to grinding them into absorbing material, the roll mill nonetheless further adversely impacts absorption and clumping properties of the resultant absorbing material by both physically and thermally modifying and retrograding starches in the spheres being ground.

The `977 publication is directed to animal litter extruded from a mixture of starch-containing cereal grain and at least 10% clay producing extruded litter particles having clay throughout that fills in pores in the outer surface of the litter particles producing an outer film of clay and starch that prevents dust from forming. Despite the extruded litter particles containing at least 10% clay, the `977 publication teaches coating them with one or more swelling clays is what imparts a clumping property to the litter particles that enables them to clump when wetted. While the clay and starch film on the outer surface of the extruded litter particles is taught in the `977 publication as beneficial for preventing dust formation, a related counterpart, U.S. Patent No. 8,733,287, acknowledges the film is undesirable because it decreases the absorption rate of the extruded litter particles and teaches the necessity of grinding the litter particles with a roller-equipped litter fragmenting device in order to fragment them in order to remove the film to increase absorption by exposing the interior of the litter particles.

U.S. Patent Nos. 9,266,088, 9,266,089, 9,266,090 and 9,491,926 are each directed to an improved extruded granular absorbent well suited for use as litter and improved methods of making extruded granular absorbent where an admixture composed starch-containing material, preferably in the form of one or more cereal grains, is extruded from an extruder under conditions that modify at least some of the starch in the admixture forming a water soluble carbohydrate polymer binder that functions as a clumping agent to self-clump together pellets of the extruded granular absorbent. While the extruded granular absorbent to which these patents are directed has enjoyed substantial commercial success, improvements nonetheless remain desirable.

In this regard, it has been learned that moisture volatilized from pellets of the granular absorbent as the pellets are extruded from the extruder die and condenses on the outer surface of the extruded pellets detrimentally impacting one or more characteristics or properties of the extruded granular absorbent pellets adversely effecting granular absorbent performance, including when used as litter. It has been further learned that the condensed moisture adversely impacts pellet performance by undesirably affecting the state, structure, phase, or matrix of the starches in the extruded pellets in a manner that can cause the freshly extruded wet pellets to undesirably stick together right out of the extruder, can detrimentally reduce pellet absorption capacity, can undesirably increase bulk density, and can adversely impact the ability of the pellets to clump together when wetted with water or urine. It also has been learned that the excessive heat at which the pellets are extruded from the extruder die also can detrimentally affect the state, structure, phase, or matrix of the starches in the extruded pellets in a manner that also can adversely impact one or more such characteristics or properties of the pellets reducing their performance and effectiveness as a granular absorbent, particularly in litter applications. Finally, where any post-extrusion processing of the extruded granular absorbent is performed that involves physical contact, e.g., impact(s), mechanical engagement, e.g., crushing and/or compression, or other physical or thermal modification of the extruded pellets, such as what typically has occurred in the past when particle-size reduction has been performed on extruded pellets, it has been learned that such post-extrusion extruded granular absorbent processing carried out in performing such particle-size reduction can also adversely affect one or more of such properties or characteristics of the pellets even further detrimentally reducing their performance.

What is needed is a system and method for making extruded granular absorbent that reduces and preferably minimizes such adverse moisture, temperature and mechanically induced changes to starch in extruded granular absorbent pellets following extrusion.

### INVENTION SUMMARY

The aforesaid object is achieved by a system for post-extrusion processing of extruded granular absorbent according to claim 1 and a method for this purpose according to claim 6. In fact the present invention is directed to a system and method for making extruded granular absorbent pellets from a starch-containing admixture that includes a cold-processing arrangement with an air pellet cooling and drying subsystem that cools and dries pellets upon extrusion and while being pneumatically conveyed in the coolant air stream from the extruder to a post-extrusion pellet processing device of a post-extrusion pellet processing subsystem that preferably is a pellet comminution device or machine that comminutes extruded pellets in a manner that improves at least one property or characteristic thereof that improves extruded granular absorbent pellet performance during use of a finished granular absorbent product composed of the post-extrusion processed pellets. The pellets are extruded from an extruder using a starch-containing mixture at a sufficiently high enough extrusion pressure and extrusion temperature to physically modify starch gelatinized in the extruder during pellet extrusion to form starch-based water soluble binder in the extruded pellets sufficient to function as a pellet clumping agent when the pellets are wetted. The extruded pellets are cold-processed upon extrusion to preserve the structure, phase, and/or starch matrix of the pellets substantially in the as extruded state not only upon extrusion but during transport away from the extruder to the post-extrusion pellet processing device where cold-processing of the pellets helps prevent and preferably minimizes changes to the as-extruded structure, phase and/or starch matrix of the pellets undergoing post-extrusion pellet processing.

In one preferred system embodiment and method implementation, the post-extrusion pellet processing device is a pellet comminution machine that comminutes extruded pellets without pulverizing, crushing or compressing the pellets further helping to prevent and also helping to further minimize changes to the as-extruded structure, phase and/or starch matrix of the pellets undergoing post-extrusion pellet comminution processing. In one such preferred system embodiment and method implementation, the post-extrusion pellet processing device is a pellet or particle size reduction machine that comminutes extruded pellets in a manner that reduces the size of oversized extruded pellets to a pellet or particle size within an acceptable pellet or particle size range while also producing even smaller more finely sized particles formed of portions severed or lopped off of extruded pellets during pellet or particle size reduction. In another such preferred system embodiment and method implementation, the cold-processing pellet air cooling and pellet air drying arrangement further includes a particle size reduction machine cooling subsystem that introduces ambient air into the pellet or particle size reduction machine to cool and/or dry pellets while the pellets are undergoing particle size reduction.

In a preferred pellet comminution machine or device embodiment used for post-extrusion pellet processing that size reduces extruded pellets, a pellet comminuting particle size reducer is employed that preferably is a rotating roll type pellet comminuting mill composed of a pair of generally horizontal side-by-side elongate pellet-comminuting corrugated rolls, preferably LePage rolls, which can be and preferably are generally parallel to one another and which rotate toward one another with the differential in the rotational speeds and spacing between the rotating rolls determining the maximum pellet size or pellet size range to which extruded pellets are particle size reduced thereby during post-extrusion pellet processing. In one such preferred pellet comminution machine or device, the pellet comminuting particle size reducer is a LePage corrugated roll mill or LePage roll granulator having a pair of such corrugated LePage rolls that rotate toward one another during extruded pellet size reduction with one of the LePage rolls being longitudinally corrugated having longitudinally extending corrugations, e.g., longitudinally formed or longitudinally cut corrugations, and the other one of the LePage rolls being circumferentially corrugated having circumferentially spaced apart corrugations extending in a circumferential direction, e.g., circumferentially formed corrugations or circumferentially cut corrugations, with rotation of the corrugated LePage rolls comminuting oversized extruded pellets in a manner that shears, severs or lopped off portions of the oversized extruded pellet without pulverizing, crushing, hammering, or otherwise compressing the pellets during particle size reduction. Performing such non-compression induced particle size reduction using such a particle size reduction roller mill equipped with such horizontally and circumferentially corrugated LePage rollers advantageously minimizes and preferably substantially completely prevents physically and thermally modifying extruded pellets contacting the rolls, being comminuted by the rolls, and/or being particle size reduced by the rolls during particle size reduction operation.

Various other features, advantages, and objects of the present invention will be made apparent from the following detailed description and any appended drawings.

### DRAWINGS DESCRIPTION

One or more preferred exemplary embodiments of the invention are illustrated in the accompanying drawings in which like reference numerals represent like parts throughout and in which:

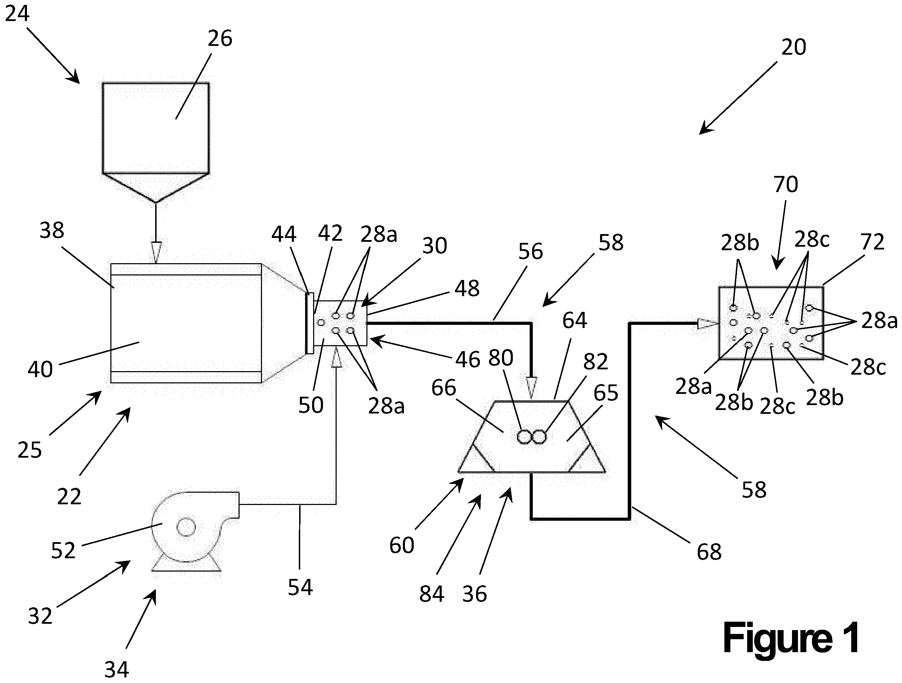

Figure 1 is a schematic diagram of an exemplary embodiment of an extruded granular absorbent manufacturing system constructed not in accordance with the present invention in carrying out a preferred but exemplary method of making and post-extrusion processing of the extruded granular absorbent where extruded granular absorbent pellets are cold-processed upon extrusion and while being conveyed to a post-extrusion pellet processing subsystem that includes a device or machine that comminutes the pellets to improve at least one property or characteristic thereof in preparing the pellets for use or inclusion in a finished extruded granular absorbent product intended for retail, consumer or commercial sale and use;

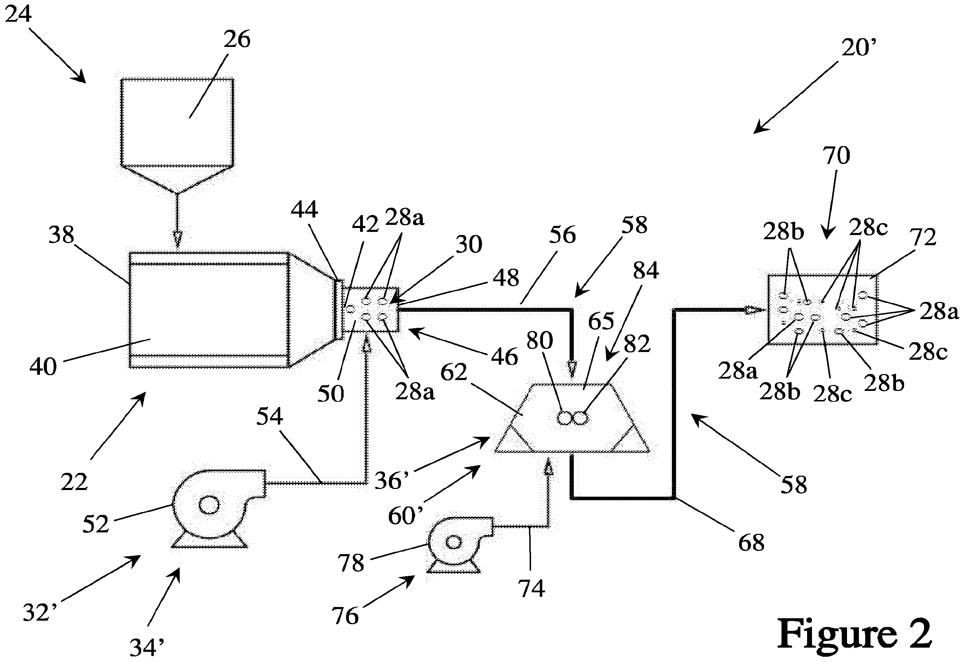

Figure 2 is a schematic diagram of a preferred embodiment of an extruded granular absorbent manufacturing system constructed in accordance with the present invention in carrying out a preferred method of making and post-extrusion processing of the extruded granular absorbent where extruded granular absorbent pellets are cold-processed upon extrusion and while being conveyed to a post-extrusion pellet processing subsystem that includes a pellet size reduction comminution device that size reduces extruded pellets in a manner that produces a finished extruded granular absorbent product composed of as-extruded pellets, size-reduced pellets and even smaller fines produced from comminuting as-extruded pellets where the pellets and fines all have a particle size falling within a desired particle size range and/or particle size distribution;

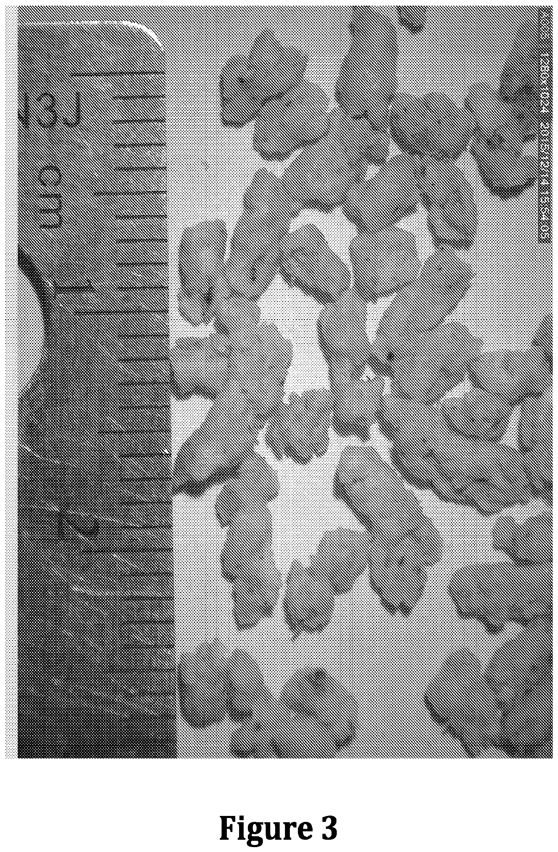

Figure 3 is a microscope photo showing pellets of extruded granular absorbent in their as-extruded form and which have a size greater than 2.38 mm (8 US Sieve) prior to non-compression induced particle size reduction;

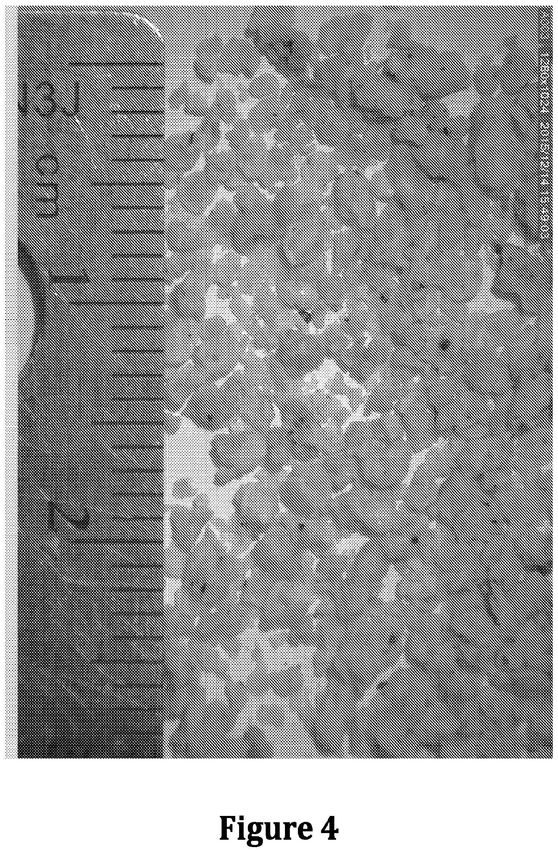

Figure 4 is another microscope photo that includes extruded pellets same as or substantially the same as those shown in Figure 3 where some but not all of the pellets have been particle-size reduced using a non-compression induced particle size reduction method and machine set to particle-size reduce pellets having a size greater than 1.194 mm (0.047 inches);

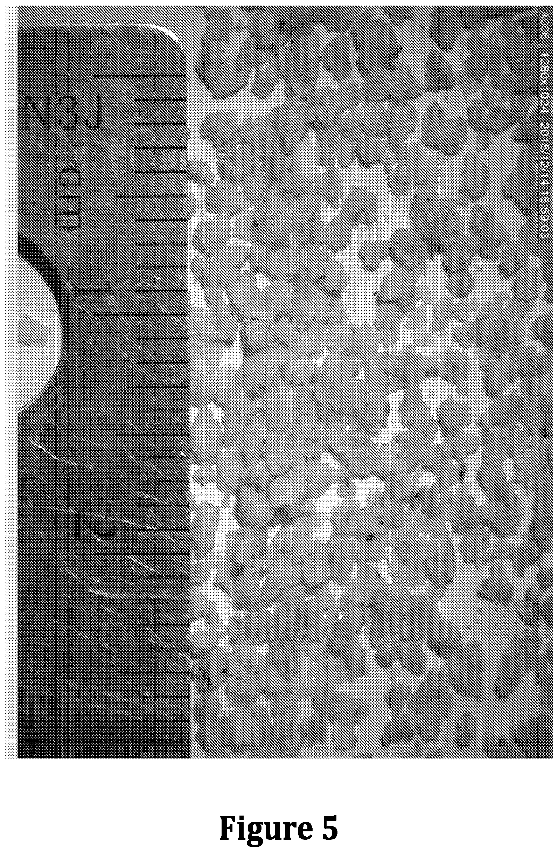

Figure 5 is still another microscope photo that includes extruded pellets same as or substantially the same as those shown in Figure 3 where some but not all of the pellets have been particle-size reduced using a non-compression induced particle size reduction method and machine set to particle-size reduce pellets having a size greater than 0.762 mm (0.030 inches);

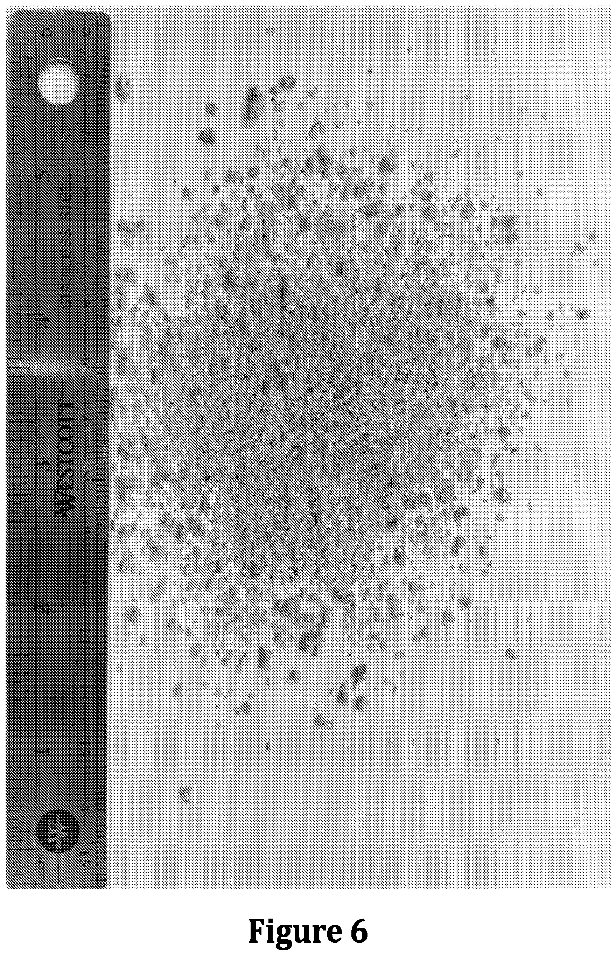

Figure 6 is a microscope photo depicting a first batch of extruded pellets and smaller more finely sized "fines" produced from or during extrusion and/or during transport immediately after extrusion but before performing non-compression induced particle size reduction;

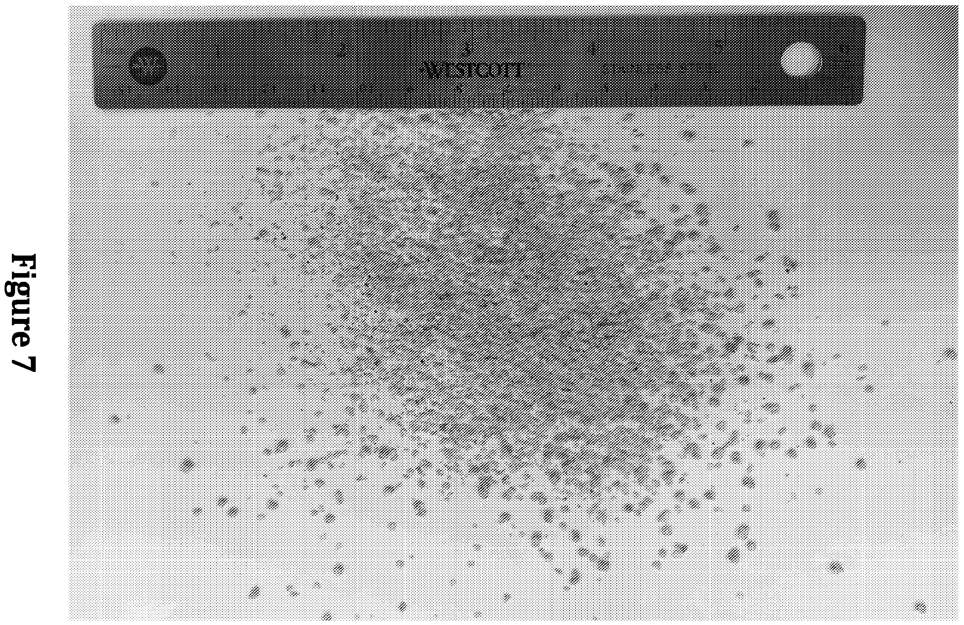

Figure 7 is a second microscope photo depicting as-extruded pellets and smaller more finely sized "fines" from the first batch of Figure 6 after performing non-compression induced particle size reduction, i.e., non-pulverizing, non-crushing and non-compressing particle size reduction, with a non-compression induced particle size reduction machine like one or more of the pellet comminuting devices or machines depicted in Figures 1 and 2 having a 1.575 mm (0.062-inch) particle size reduction setting;

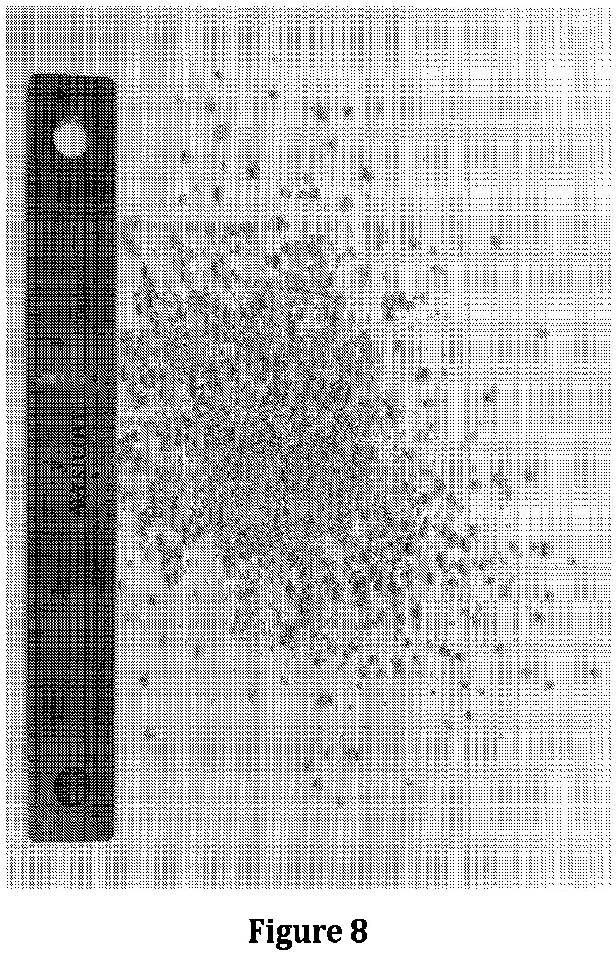

Figure 8 is a third microscope photo depicting as-extruded pellets and smaller more finely sized "fines" from the first batch of Figure 6 after performing non-compression induced particle size reduction with a non-compression induced particle size reduction machine like one or more of those depicted in Figure 1 and/or Figure 2 producing a smaller 1.372 mm (0.054-inch) particle size reduction setting thereby increasing the ratio of fines produced as a result;

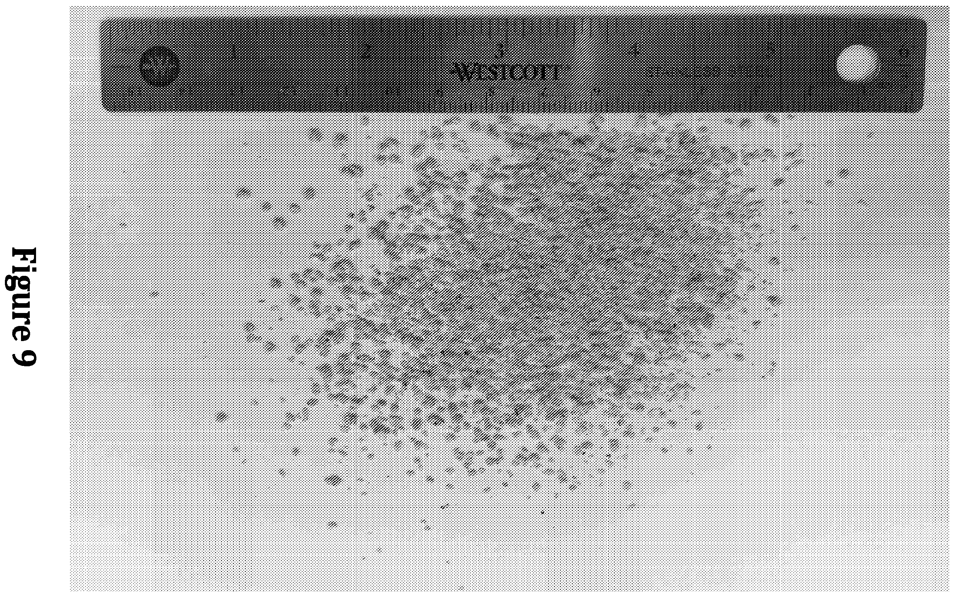

Figure 9 is a fourth microscope photo depicting as-extruded pellets and smaller more finely sized "fines" from the first batch of Figure 6 after performing non-compression induced particle size reduction with such a non-compression induced particle size reduction machine having a 1.245 mm (0.049-inch) particle size reduction setting further increasing the ratio of fines produced as a result;

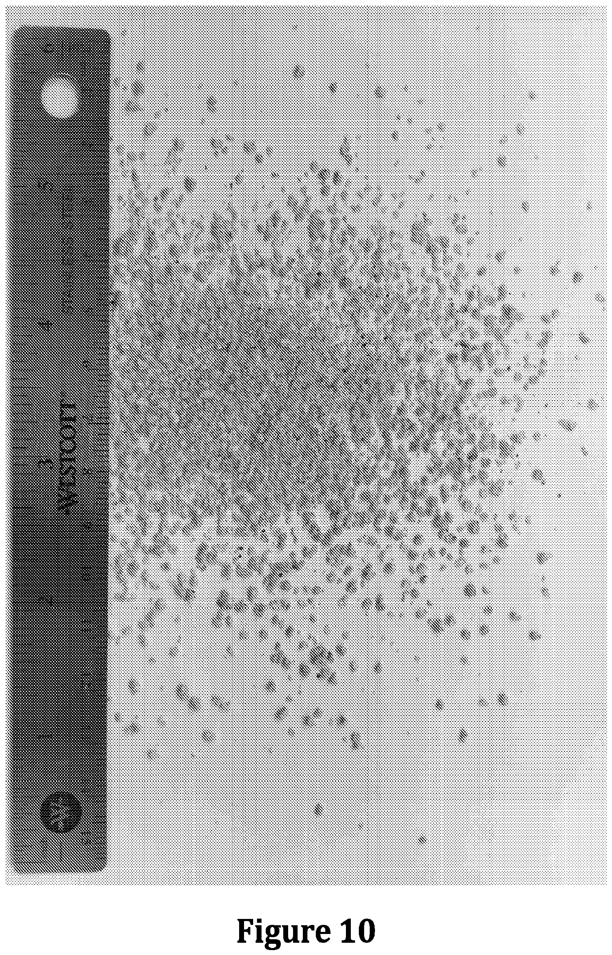

Figure 10 is a fifth microscope photo depicting as-extruded pellets and smaller more finely sized "fines" from the first batch of Figure 6 after performing non-compression induced particle size reduction with such a non-compression induced particle size reduction machine like that depicted in Figure 4 having a 1.143 mm (0.045-inch) particle size reduction setting even further increasing the ratio of fines produced as a result;

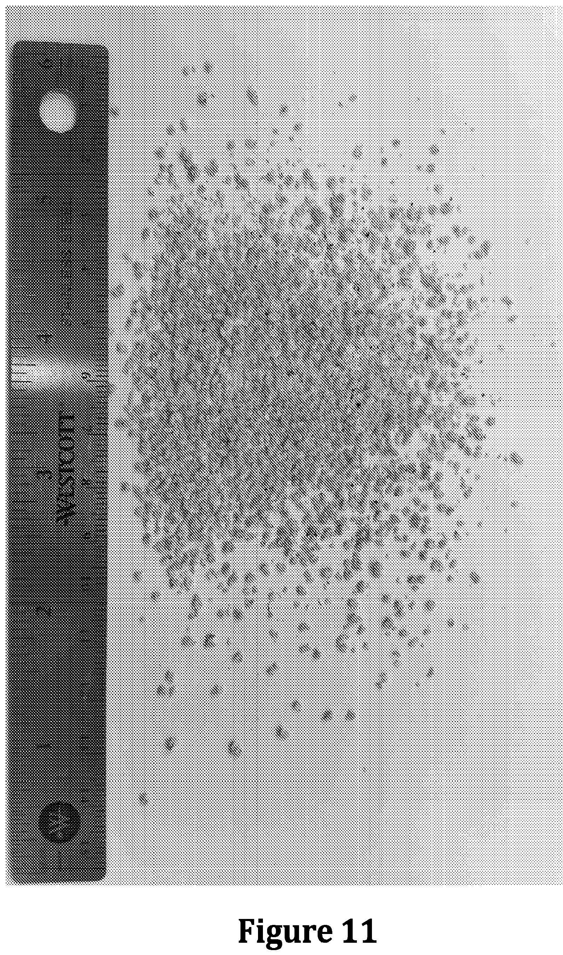

Figure 11 is a sixth microscope photo depicting as-extruded pellets and smaller more finely sized "fines" from the first batch of Figure 6 after performing non-compression induced particle size reduction with a non-compression induced particle size reduction machine having a 0.991 mm (0.039-inch) particle size reduction setting increasing the ratio of fines produced as a result even more than that depicted in Figure 10;

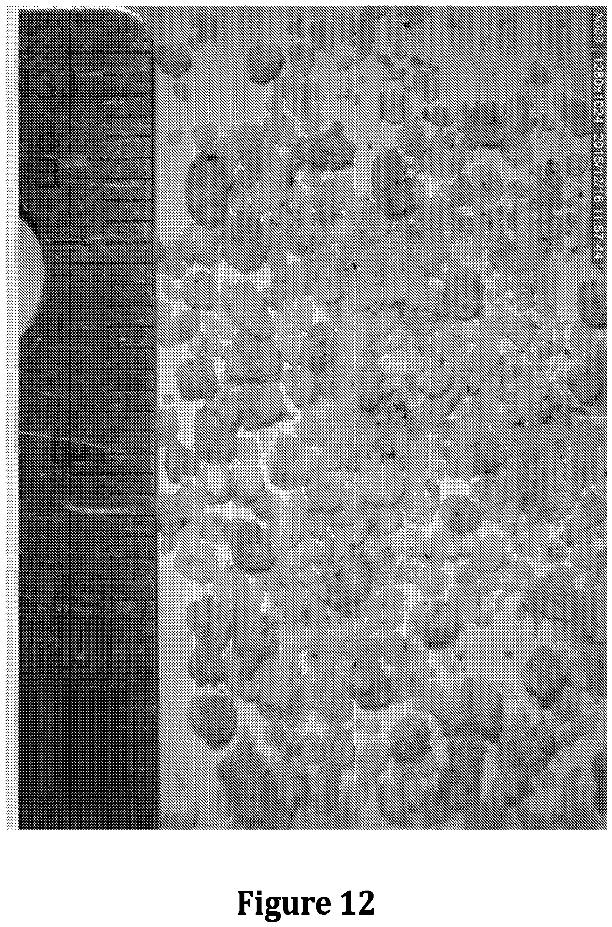

Figure 12 is a microscope photo depicting an enlarged second batch of as-extruded pellets and smaller more finely sized "fines" produced from or during extrusion and/or during transport immediately after extrusion but before performing non-compression induced particle size reduction in accordance with the present invention;

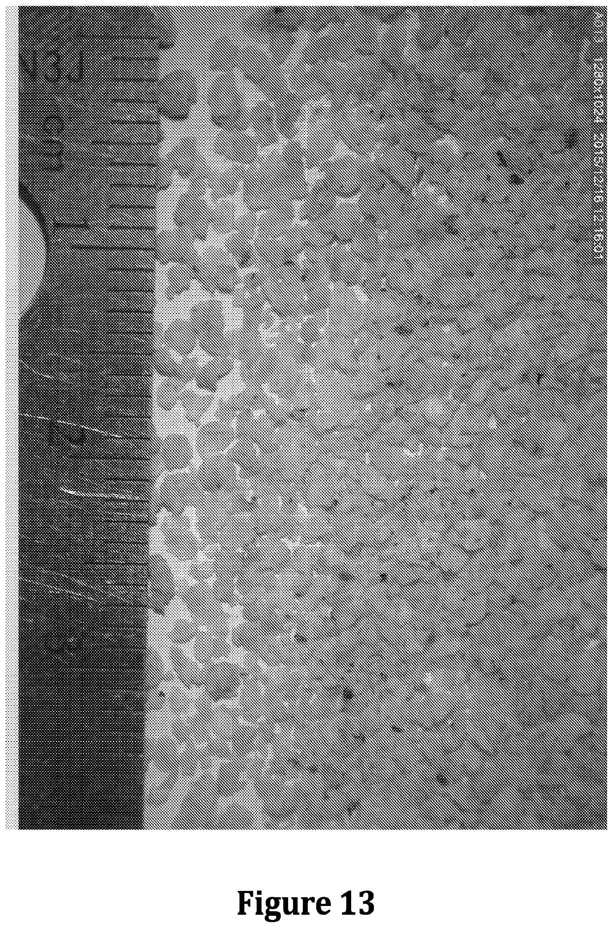

Figure 13 is a second microscope photo depicting an increase in the amount and ratio of fines produced after performing non-compression induced particle size reduction in accordance with the present invention using a non-compression induced particle size reduction machine like the LePage corrugated roller equipped particle size reduction machine schematically depicted in Figure 2 having a 0.762 mm (0.030-inch) particle size reduction setting on all of the as-extruded pellets and smaller more finely sized "fines" of the second batch of Figure 12;

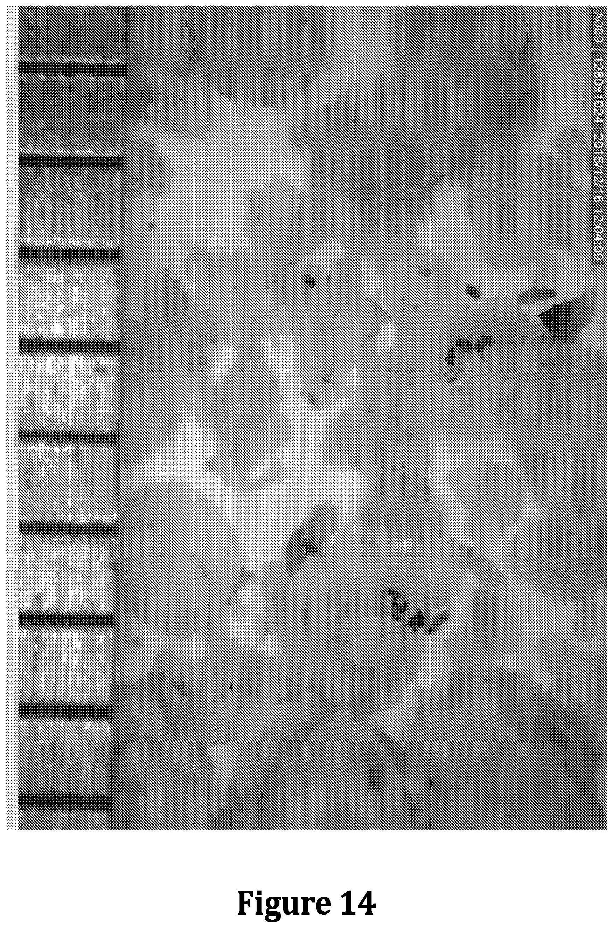

Figure 14 is a microscope photo depicting an enlarged third batch of as-extruded pellets and smaller more finely sized "fines" produced from or during extrusion and/or during transport immediately after extrusion but before performing non-compression induced particle size reduction in accordance with the present invention;

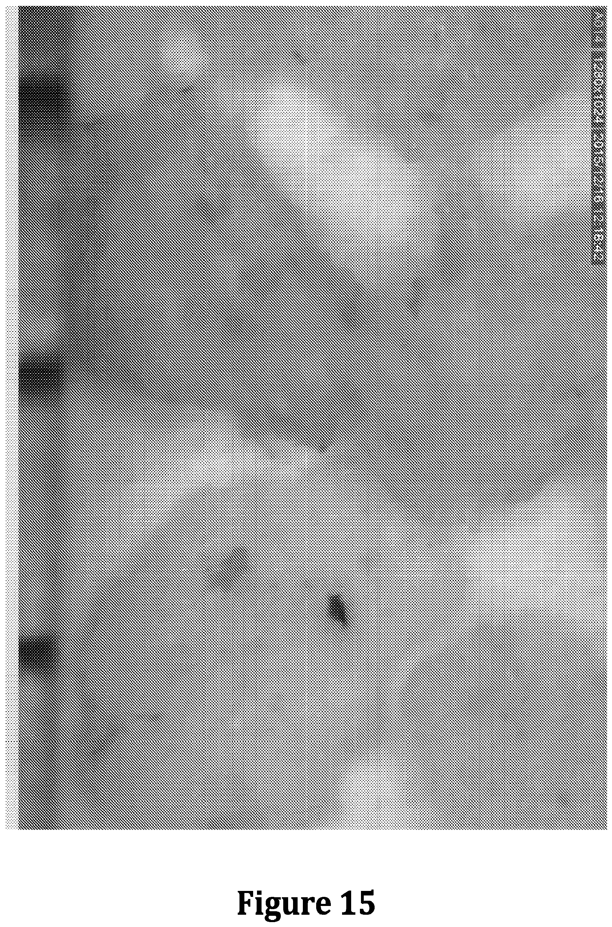

Figure 15 is a second microscope photo enlarged to show the third batch after all of the as-extruded pellets and smaller fines of the third batch of Figure 14 have been particle size reduced in accordance with the present invention using non-compression induced particle size reduction with a non-compression induced particle size reduction machine that preferably is the LePage corrugated roller equipped particle size reduction machine schematically depicted in Figure 2 having a 0.762 mm (0.030-inch) particle size reduction setting;

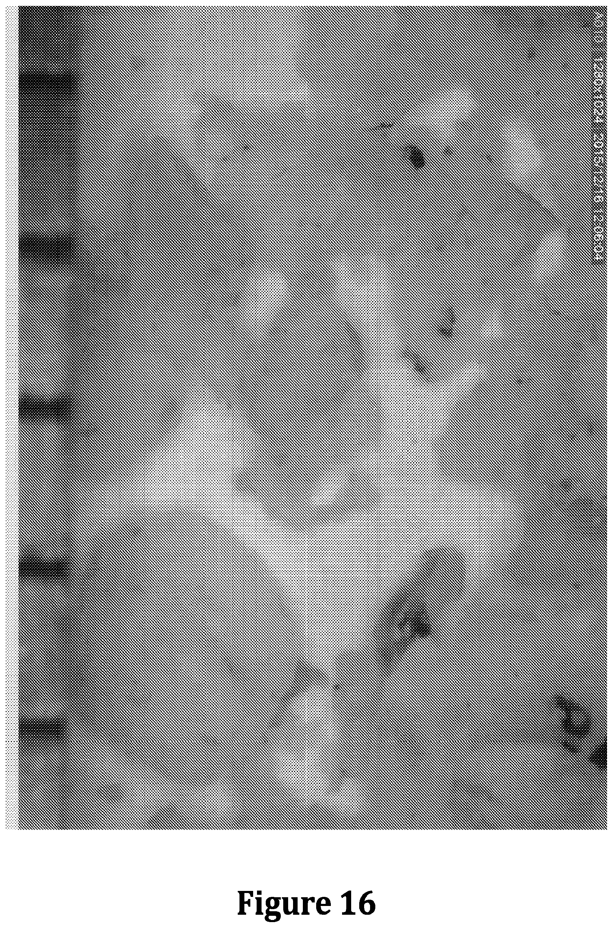

Figure 16 is a microscope photo depicting an enlarged fourth batch of as-extruded pellets and smaller more finely sized "fines" produced from or during extrusion and/or during transport immediately after extrusion but before performing non-compression induced particle size reduction using the LePage corrugated roller equipped particle size reduction machine schematically depicted in Figure 2;

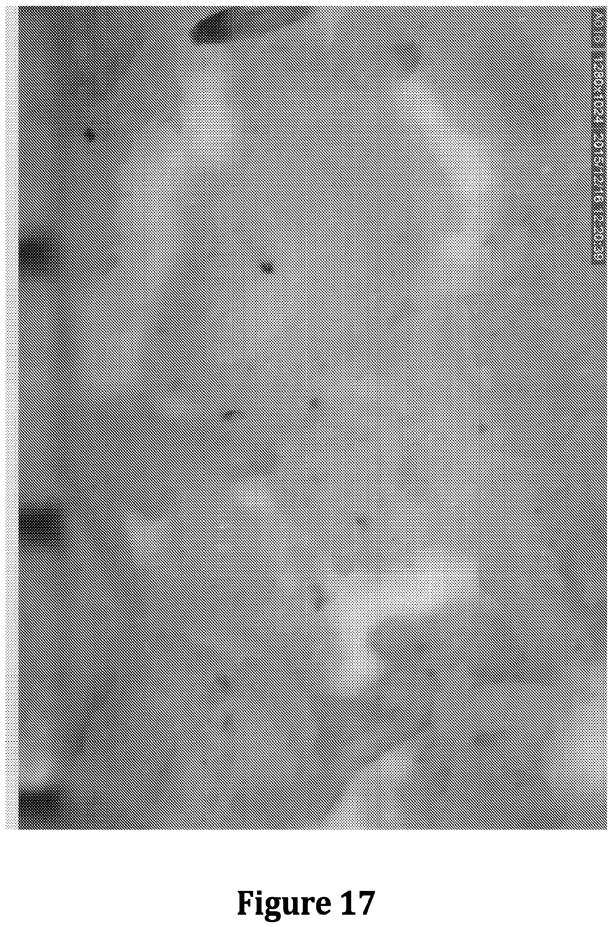

Figure 17 is a second microscope photo enlarged to show the fourth batch after all of the as-extruded pellets and smaller fines of the fourth batch of Figure 16 have been particle size reduced using non-compression induced particle size reduction in accordance with the present invention with a non-compression induced particle size reduction machine that preferably is the LePage corrugated roller equipped particle size reduction machine schematically depicted in Figure 2 configured or setup to have a 0.762 mm (0.030-inch) particle size reduction setting;

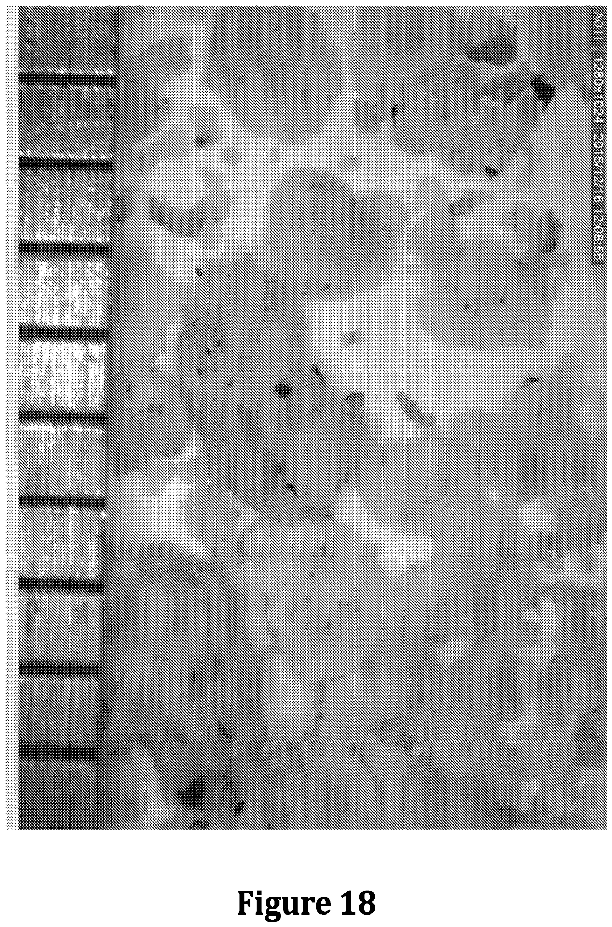

Figure 18 is a microscope photo depicting an enlarged fifth batch of as-extruded pellets and smaller more finely sized "fines" produced from or during extrusion and/or during transport immediately after extrusion but before performing non-compression induced particle size reduction;

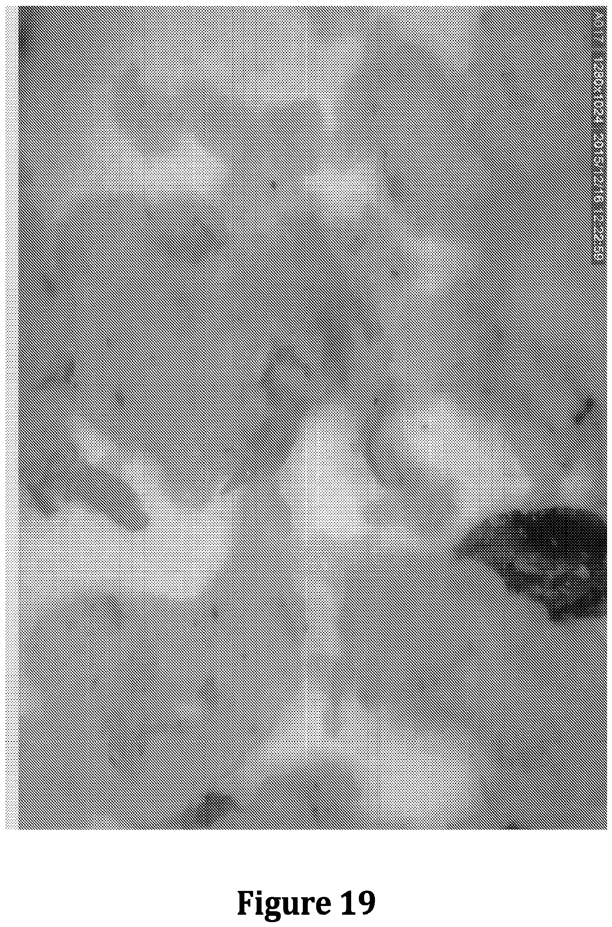

Figure 19 is a second microscope photo enlarged to show the fifth batch after all of the as-extruded pellets and smaller fines of the fifth batch of Figure 18 have been particle size reduced using non-compression induced particle size reduction in accordance with the present invention with a non-compression induced particle size reduction machine that preferably is the LePage corrugated roller equipped particle size reduction machine schematically depicted in Figure 2 having a 0.762 mm (0.030-inch) particle size reduction setting

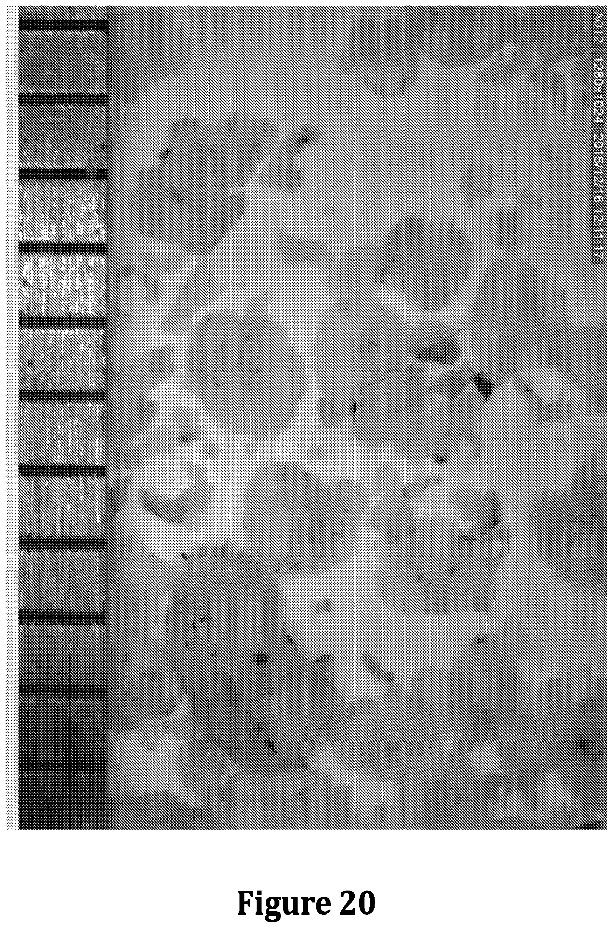

Figure 20 is a microscope photo depicting an enlarged sixth batch of as-extruded pellets and smaller more finely sized "fines" produced from or during extrusion and/or during transport immediately after extrusion but before performing non-compression induced particle size reduction; and

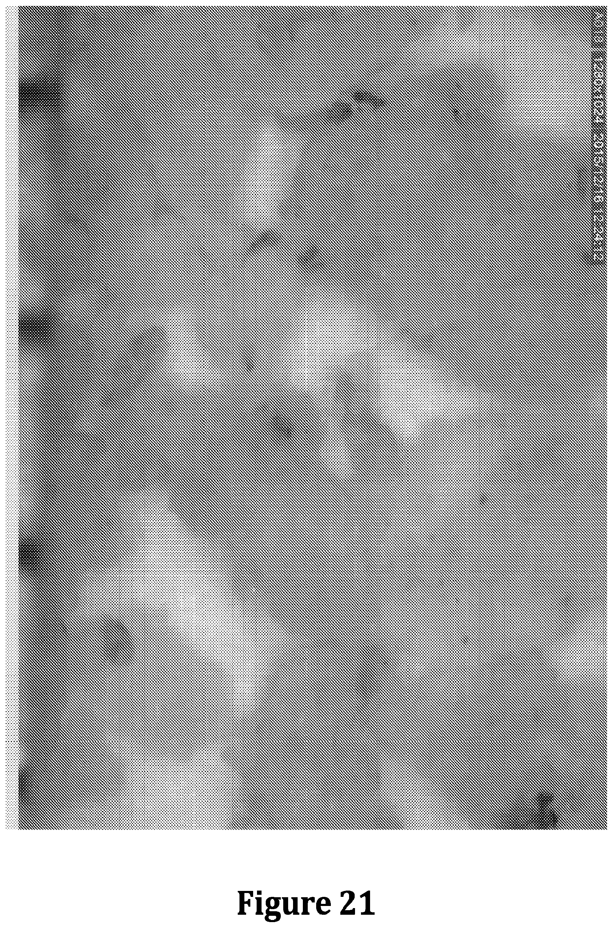

Figure 21 is a second microscope photo enlarged to show the sixth batch after all of the as-extruded pellets and smaller fines of the sixth batch of Figure 20 have been particle size reduced using non-compression induced particle size reduction in accordance with the present invention with a non-compression induced particle size reduction machine that preferably is the the LePage corrugated roller equipped particle size reduction machine schematically depicted in Figure 2 having a 0.762 mm (0.030-inch) particle size reduction setting.

### DETAILED DESCRIPTION

Figure 1 illustrates an exemplary embodiment of a system 20 for producing extruded granular absorbent not in accordance with the invention that employs an extruder 22 which gelatinizes starch in a starch-containing admixture delivered into the extruder 22 from an admixture-holding container 24, e.g., a hopper or bin 26, and extrudes the gelatinized starch-containing admixture from the extruder 22 in the form of at least a plurality of pairs of, i.e., at least three, pellets 28a of granular absorbent extrudate 30 per second of extruder operation that are processed after extrusion using a cold-processing arrangement 32 and method of the present invention that cools, dries and thereafter processes the cooled and dried extruded pellets 28a in a manner that changes at least one characteristic or property of the pellets 28a in preparation for granular absorbent use. The cold-processing arrangement 32 includes a cooling and drying subsystem 34 that is configured to cold-process the extruded pellets 28a by at least one of cooling and drying the pellets 28a, and a granular absorbent processing subsystem 36 that post-extrusion processes the cooled and/or dried pellets 28a in a manner that changes and/or preferably improves at least one characteristic or property of the pellets 28a while maintaining the pellets 28a in a cold-processed condition during processing.

The granular absorbent pellets 28a are therefore cold-processed upon extrusion from the extruder 22 by at least cooling the pellets 28a and preferably also by drying the pellets 28a immediately upon extrusion using such a cold-processing arrangement 32 to thereby advantageously preserve and preferably substantially freeze at least one of the state, structure, phase and/or matrix of one or more of the starches in the pellets 28a modified by or during extrusion of the starch-containing admixture from the extruder 22 producing pellets 28a of extruded granular absorbent of the present invention that better maintain(s) their starch state(s), starch structure(s), starch phase(s), starch matrix, liquid absorbent properties and/or solubility of starch in the pellets 28a during granular absorbent use. Not only does cold-processing of the pellets 28a, beginning the instant the pellets are extruded out of the die 44 of the extruder 22, preserve and preferably substantially freeze the state, structure, phase and/or matrix of the extruder-modified starches in the pellets 28a, including by preventing rapid phase retrogradation of starch, including water soluble binder, in the pellets 28a, cold-processing of the pellets 28a also advantageously prevents post-extrusion shrinkage of the pellets 28a that otherwise would typically occur immediately upon extrusion from the die 44 of the extruder 22. Such cold-processing of the pellets 28a immediately upon extrusion further advantageously enables post-extrusion processing to be carried out by the post-extrusion granular absorbent pellet processing subsystem 36 on the cooled and/or dried pellets 28a in a manner that changes and which preferably improves at least one characteristic or property of the pellets 28a during or as a result of post-extrusion processing while maintaining the pellets 28a substantially in the cold-processed condition during post-extrusion pellet processing.

With continued reference to Figure 1, the extruded granular absorbent production system 20 has at least one extruder 22 that preferably is a single-screw food-type, snack-type or extrusion-cooker extrusion machine 38, e.g., single-screw extruder 38, which employs a rotary screw drive motor (not shown) having a horsepower rating of at least 14.71 kW (20 horsepower) and preferably no greater than 147.1 kW (200 horsepower), preferably between 29.42 kW (40 horsepower) and 110.3 kW (150 horsepower), and more preferably between 36.77 kW (50 horsepower) and 73.55 kW (100 horsepower), which drives a single generally horizontal elongate screw or auger received inside an elongate horizontally oriented generally cylindrical chamber of a barrel of the extruder 38 that can be heated and form part of or be disposed within an elongate generally horizontally extending extruder housing 40. The extruder 22 has a generally circular die 42 disposed at a discharge end 44 of the extruder that has at least one and preferably at least a plurality of annular rings or arrays of die through-holes (not shown) formed therein with each ring or array having at least a plurality of pairs of, i.e., at least three, die through-holes (not shown) each with a length, depth, diameter, throat and/or other die hole configuration suitable for discharging or expelling extrudate, e.g., ropes of starch-containing granular absorbent extrudate extruded from a starch-containing admixture, therethrough during extruder operation used to form extruded starch-containing pellets 28a having a desired width or diameter preferably falling within an acceptable range of widths or diameters suitable for the intended granular absorbent use or application. As the ropes of granular absorbent extrudate are expelled or discharged under pressure through the holes in the extruder die 42, a rotating cutter (not shown) equipped with at least a plurality, preferably at least a plurality of pairs of, i.e., at least three, cutter arms (not shown) each carrying a replaceable knife or blade is rotated by an electric motor at a rotational speed of at least 2,500 revolutions per minute (RPM), preferably at least 3,500 RPM, and more preferably at least 4,000 RPM to cut the granular absorbent extrudate ropes being discharged from or expelled out the holes of the die 42 into discrete pellets 28a that are elongate, preferably oblong, and which have a desired pellet length that preferably falls within an acceptable range of lengths suitable for the intended granular absorbent use of the pellets 28a. Each one of the extruded pellets 28a is not only elongate but can be oblong, e.g. generally oval, and preferably irregularly shaped, e.g., having one or more lobes, fibrils, fingers, or other outwardly extending projections, having a porous outer surface with at least a plurality of spaced apart pores, holes, or recesses formed in the pellet outer surface, and having a void filled pellet interior that includes at least a plurality, preferably at least a plurality of pairs of, i.e. at least three, internal voids within the pellet 28a preferably forming a void-filled internal starch pellet matrix. Although also not shown in Figure 1, the rotary pellet cutter is received in a knife cage 46 that houses the cutter and also forms a pellet-collecting enclosure 48, e.g., pellet collector 48, disposed at the discharge end 44 of the extruder 22, e.g., discharge end 44 of single-screw extruder 38, which also encloses the extruder die 42 such that the pellets 28a cut by the cutter from the extrudate expelled or discharged out the holes of the die 42 during extruder operation are expelled or discharged into a chamber 50 defined within cage 46 or pellet-collecting enclosure 48.

An extruded granular absorbent production system 20 can employ the extruded granular absorbent extruding methods and/or equipment, use the starch-containing admixture formulations, and/or blend the resultant pellets 28a of extruded granular absorbent in accordance with those disclosed or otherwise described in commonly owned U.S. Application Serial Nos. 13/842534, 13/868073, 13/868084, 14/426483, 14/605045, 14/656086, 14/656692, and 14/668975, respectively published as U.S. Patent Application Publication Nos. US20140069344, US20140069345, US20140069346, US20150238931, US20150145164, US20150181832, US20150181834, and US20150196005 including to produce extruded granular absorbent pellets 28a, including that which is well suited for use as cat, dog, pet or animal litter. In addition, it is also contemplated that select portions of the extruded granular absorbent production method and extruded granular absorbent production system 20 can be incorporated into and/or used with the extruded granular absorbent and/or litter making methods, systems, production lines, equipment and/or extruders disclosed in one or more of U.S. Patent Application Publication Nos. US20140069344, US20140069345, US20140069346, US20150238931, US20150145164, US20150181832, US20150181834, and/or US20150196005. More specifically, it is contemplated that portions of the extruded granular absorbent production method and extruded granular absorbent production system 20 that can be incorporated into or used with the extruded granular absorbent and/or litter making methods, systems, production lines, equipment and/or extruders disclosed in one or more of U.S. Patent Application Publication Nos. US20140069344, US20140069345, US20140069346, US20150238931, US20150145164, US20150181832, US20150181834, and/or US20150196005 include at least those method steps and/or system components, e.g. equipment, responsible for cold-processing of the extruded pellets 28a upon or after extrusion, including the cold-processing arrangement 32, preferably at least the cooling and drying subsystem 34 thereof, and/or that which relates to post-extrusion processing of the pellets including post-extrusion granular absorbent, e.g., pellet 28a, processing subsystem 36, which includes related equipment, including one or more of the post-extrusion processing devices, machines and/or mills disclosed and or shown elsewhere herein.

In an improved presently preferred extruded granular absorbent production method that employs an improved extruded granular absorbent production system 20, a starch-containing admixture having at least 35% starch, preferably at least 40% starch, and more preferably at least 45% starch by dry admixture weight, and a moisture content of no greater than 30%, preferably no greater than about 25% ± 3.5%, and more preferably no greater than about 20% ± 2.5%, by dry admixture weight is delivered from the hopper 26, such as via gravity feed, into the extruder 22, preferably single-screw extruder 38, where the admixture in the extruder is subjected to an extrusion pressure at or adjacent the extruder discharge end 44 or at the die 42 during extrusion of at least 13791 kPa (200 PSI), preferably at least 17236 kPa (2500 PSI), and more preferably at least about 20684 kPa ± 10% (3000 PSI ± 10%), and an extrusion temperature at or adjacent the extruder discharge end 44 or at the die 42 during extrusion of at least 100° C (212° F), preferably at least 120°C (248°F), and more preferably at least about 135°C ± 10°C (275°F ± 18°F) such that at least some of the starch gelatinized in the extruder during extrusion is physically and/or thermally modified into forming a starch-based water soluble binder in each extruded pellet 28a in an amount by pellet weight sufficient to cause at least a plurality of pairs, i.e., at least three, of the pellets 28a to self-clump together forming an agglutinated mass composed of at least a plurality of pairs of the pellets 28a when wetted by water or urine, e.g., cat, dog, pet or other animal urine making such pellets 28a suitable for use as granular absorbent litter. In a preferred admixture and granular absorbent extrusion method, each one of the extruded pellets 28a preferably has enough starch-based water soluble binder that at least some of the water-soluble binder forms a flowable adhesive when pellets 28a are wetted that flows from, around and in between each wetted pellet 28a and at least one other pellet 28a adjacent thereto, adjoining therewith, or in contact therewith.

No additional moisture or water is added to the admixture while in the extruder 22 during starch gelatinization and pellet extrusion. In one preferred admixture, the at least at least 35% starch, preferably at least 40% starch, and more preferably at least 45% starch by dry admixture weight is provided from whole grain sorghum having a moisture content no greater than 18%, preferably no greater than 15%, and more preferably no greater than about 14% ± 1% by weight of the admixture, with a preferred admixture composed of at least 50% whole grain sorghum, preferably at least 65% whole grain sorghum, and more preferably at least 75% whole grain sorghum by dry admixture weight with the entirety of such an admixture having a total moisture content of no greater than 18%, preferably no greater than 15%, and more preferably no greater than about 14% ± 1% by weight of the admixture. No additional moisture or water is added to the admixture while in the extruder 22 during starch gelatinization and pellet extrusion. In such a preferred sorghum-based admixture and granular absorbent extrusion method, each one of the extruded pellets 28a preferably has enough starch-based water soluble binder that at least some of the water-soluble binder forms a flowable adhesive when pellets 28a are wetted that flows from, around and in between each wetted pellet 28a and at least one other pellet 28a adjacent thereto, adjoining therewith, or in contact therewith.

In another preferred admixture, the at least at least 35% starch, preferably at least 40% starch, and more preferably at least 45% starch by dry admixture weight is provided from corn, preferably comminuted or ground corn in the form of cornmeal, and more preferably degermed commeal having a moisture content no greater than 30%, preferably no greater than 25%, and more preferably no greater than about 20% ± 2.5% by weight of the admixture, with a preferred admixture composed of at least 50% of the com, preferably cornmeal, and more preferably degermed cornmeal, preferably at least 65% of the com, preferably cornmeal, and more preferably degermed cornmeal, and more preferably at least 75% of the com, preferably cornmeal, and more preferably degermed cornmeal by dry admixture weight with the entirety of such an admixture having a total moisture content of no greater than 30%, preferably no greater than 25%, and more preferably no greater than about 20% ± 2.5% by weight of the admixture. No additional moisture or water is added to the admixture while in the extruder 22 during starch gelatinization and pellet extrusion. In such a preferred corn-containing admixture and granular absorbent extrusion method, each one of the extruded pellets 28a preferably has enough starch-based water soluble binder that at least some of the water-soluble binder forms a flowable adhesive when pellets 28a are wetted that flows from, around and in between each wetted pellet 28a and at least one other pellet 28a adjacent thereto, adjoining therewith, or in contact therewith.

A scoopable clump is formed of such an agglutinated mass of such wetted pellets 28a within two minutes of the plurality of pairs of pellets 28a being wetted that can be readily scooped from other pellets 28a of extruded granular absorbent litter in a litter box and produces a hardened clump when the agglutinated mass is dried to a moisture content of no greater than about 12% ± 2%, preferably less than 12%, by clump weight having a clump compressive crush strength of at least 1378 kPa (200 PSI), preferably at least 2413 kPa (350 PSI), and more preferably at least 3447 kPa (500 PSI) and a clump retention rate of at least 90%, preferably at least 92%, and more preferably at least 95%.

In a preferred extruded granular absorbent method and embodiment, such an admixture having at least admixture having at least 35% starch, preferably at least 40% starch, and more preferably at least 45% starch by dry admixture weight, and a moisture content of no greater than 30%, preferably no greater than about 25% ± 3.5%, and more preferably no greater than about 20% ± 2.5%, by dry admixture weight is gelatinized in the extruder 22, preferably single-screw extruder 38, and subjected to an extrusion pressure at or adjacent the extruder discharge end 44 or at the die 42 during extrusion of at least 13791 kPa (2000 PSI), preferably at least 17236 kPa (2500 PSI), and more preferably at least about 20684 kPa ± 10% (3000 PSI ± 10%), and an extrusion temperature at or adjacent the extruder discharge end 44 or at the die 42 during extrusion of at least 100° C (212° F), preferably at least 120°C (248°F), and more preferably at least about 135°C ± 10°C (275°F ± 18°F) such that at least some of the starch gelatinized in the extruder during extrusion is physically and/or thermally modified into forming at least 5% starch-based water soluble binder, preferably least 5% water-soluble carbohydrate polymer binder, and more preferably at least 5% cold water soluble starch or starch-based binder by pellet weight in each extruded pellet 28a that functions as a water-soluble clumping agent that preferably is an amount great enough in each extruded granular absorbent pellet 28a to self-clump together at least a plurality of pairs of, i.e., at least three, pellets 28a, without the presence of any other clumping agent or binder, forming an agglutinated mass of the pellets 28a when the at least a plurality of pairs of the pellets 28a are wetted with water or urine. No additional moisture or water is added to the admixture while in the extruder 22 during starch gelatinization and pellet extrusion. In one preferred admixture, the at least at least 35% starch, preferably at least 40% starch, and more preferably at least 45% starch by dry admixture weight is provided from whole grain sorghum having a moisture content no greater than 18%, preferably no greater than 15%, and more preferably no greater than about 14% ± 1% by weight of the admixture, with a preferred admixture composed of at least 50% whole grain sorghum, preferably at least 65% whole grain sorghum, and more preferably at least 75% whole grain sorghum by dry admixture weight with the entirety of such an admixture having a total moisture content of no greater than 18%, preferably no greater than 15%, and more preferably no greater than about 14% ± 1% by weight of the admixture. No additional moisture or water is added to the admixture while in the extruder 22 during starch gelatinization and pellet extrusion. In another preferred admixture, the at least at least 35% starch, preferably at least 40% starch, and more preferably at least 45% starch by dry admixture weight is provided from corn, preferably comminuted or ground corn in the form of cornmeal, and more preferably degermed commeal having a moisture content no greater than 30%, preferably no greater than 25%, and more preferably no greater than about 20% ± 2.5% by weight of the admixture, with a preferred admixture composed of at least 50% of the com, preferably cornmeal, and more preferably degermed cornmeal, preferably at least 65% of the com, preferably cornmeal, and more preferably degermed cornmeal, and more preferably at least 75% of the com, preferably cornmeal, and more preferably degermed commeal by dry admixture weight with the entirety of such an admixture having a total moisture content of no greater than 30%, preferably no greater than 25%, and more preferably no greater than about 20% ± 2.5% by weight of the admixture. No additional moisture or water is added to the admixture while in the extruder 22 during starch gelatinization and pellet extrusion. In such a preferred admixture and granular absorbent extrusion method, each one of the extruded pellets 28a preferably has enough starch-based water soluble binder that at least some of the water-soluble binder forms a flowable adhesive when pellets 28a are wetted that flows from, around and in between each wetted pellet 28a and at least one other pellet 28a adjacent thereto, adjoining therewith, or in contact therewith. A scoopable clump is formed of such an agglutinated mass of such wetted pellets 28a within two minutes of the plurality of pairs of pellets 28a being wetted that can be readily scooped from other pellets 28a of extruded granular absorbent litter in a litter box and produces a hardened clump when the agglutinated mass is dried to a moisture content of no greater than about 12% ± 2%, preferably less than 12%, by clump weight having a clump compressive crush strength of at least 1378 kPa (200 PSI), preferably at least 2413 kPa (350 PSI), and more preferably at least 3447 kPa (500 PSI) and a clump retention rate of at least 90%, preferably at least 92%, and more preferably at least 95%.

In another preferred extruded granular absorbent method and embodiment, such an admixture having at least admixture having at least 35% starch, preferably at least 40% starch, and more preferably at least 45% starch by dry admixture weight, and a moisture content of no greater than 30%, preferably no greater than about 25% ± 3.5%, and more preferably no greater than about 20% ± 2.5%, by dry admixture weight is gelatinized in the extruder 22, preferably single-screw extruder 38, and subjected to an extrusion pressure at or adjacent the extruder discharge end 44 or at the die 42 during extrusion of a at least 13791 kPa (2000 PSI), preferably at least 17236 kPa (2500 PSI), and more preferably at least at least about 20684 kPa ± 10% (3000 PSI ± 10%), and an extrusion temperature at or adjacent the extruder discharge end 44 or at the die 42 during extrusion of at least 100°C (212°F), preferably at least 120°C (248°F), and more preferably at least about 135°C ± 10°C (275°F ± 18°F) such that at least some of the starch gelatinized in the extruder during extrusion is physically and/or thermally modified into forming at least 7.5% starch-based water soluble binder, preferably least 7.5% water-soluble carbohydrate polymer binder, and more preferably at least 7.5% cold water soluble starch or starch-based binder in each extruded pellet 28a by pellet weight that functions as a water-soluble clumping agent that preferably is an amount great enough in each extruded granular absorbent pellet 28a to self-clump at least a plurality of pairs of pellets 28a, without the presence of any other clumping agent or binder, into an agglutinated mass of the pellets 28a when the at least a plurality of pairs of the pellets 28a are wetted with water or urine. No additional moisture or water is added to the admixture while in the extruder 22 during starch gelatinization and pellet extrusion. In one preferred admixture, the at least at least 35% starch, preferably at least 40% starch, and more preferably at least 45% starch by dry admixture weight is provided from whole grain sorghum having a moisture content no greater than 18%, preferably no greater than 15%, and more preferably no greater than about 14% ± 1 % by weight of the admixture, with a preferred admixture composed of at least 50% whole grain sorghum, preferably at least 65% whole grain sorghum, and more preferably at least 75% whole grain sorghum by dry admixture weight with the entirety of such an admixture having a total moisture content of no greater than 18%, preferably no greater than 15%, and more preferably no greater than about 14% ± 1% by weight of the admixture. No additional moisture or water is added to the admixture while in the extruder 22 during starch gelatinization and pellet extrusion. In another preferred admixture, the at least at least 35% starch, preferably at least 40% starch, and more preferably at least 45% starch by dry admixture weight is provided from corn, preferably comminuted or ground corn in the form of cornmeal, and more preferably degermed cornmeal having a moisture content no greater than 30%, preferably no greater than 25%, and more preferably no greater than about 20% ± 2.5% by weight of the admixture, with a preferred admixture composed of at least 50% of the com, preferably cornmeal, and more preferably degermed cornmeal, preferably at least 65% of the com, preferably cornmeal, and more preferably degermed cornmeal, and more preferably at least 75% of the com, preferably cornmeal, and more preferably degermed commeal by dry admixture weight with the entirety of such an admixture having a total moisture content of no greater than 30%, preferably no greater than 25%, and more preferably no greater than about 20% ± 2.5% by weight of the admixture. No additional moisture or water is added to the admixture while in the extruder 22 during starch gelatinization and pellet extrusion. A scoopable clump is formed of such an agglutinated mass of such wetted pellets 28a within two minutes of the plurality of pairs of pellets 28a being wetted that can be readily scooped from other pellets 28a of extruded granular absorbent litter in a litter box and which is an agglutinated mass of the pellets 28a that produces a hardened clump when the agglutinated pellet mass is dried to a moisture content of no greater than about 12% ± 2%, preferably less than 12%, by clump weight having a clump compressive crush strength of at least 1378 kPa (200 PSI), preferably at least 2413 kPa (350 PSI), and more preferably at least 3447 kPa (500 PSI) and a clump retention rate of at least 90%, preferably at least 92%, and more preferably at least 95%. In such a preferred admixture and granular absorbent extrusion method, each one of the extruded pellets 28a preferably has enough starch-based water soluble binder that at least some of the water-soluble binder forms a flowable adhesive when pellets 28a are wetted that flows from, around and in between each wetted pellet 28a and at least one other pellet 28a adjacent thereto, adjoining therewith, or in contact therewith.

In still another preferred extruded granular absorbent method and embodiment, such an admixture having at least admixture having at least 35% starch, preferably at least 40% starch, and more preferably at least 45% starch by dry admixture weight, and a moisture content of no greater than 30%, preferably no greater than about 25% ± 3.5%, and more preferably no greater than about 20% ± 2.5%, by dry admixture weight is gelatinized in the extruder 22, preferably single-screw extruder 38, and subjected to an extrusion pressure at or adjacent the extruder discharge end 44 or at the die 42 during extrusion of at least 13791 kPa(2000 PSI), preferably at least 17236 kPa (2500 PSI), and more preferably at least about 20684 kPa ± 10% (3000 PSI ± 10%), and an extrusion temperature at or adjacent the extruder discharge end 44 or at the die 42 during extrusion of at least 100°C (212°F), preferably at least 120°C (248°F), and more preferably at least about 135°C ± 10°C (275°F ± 18°F) such that at least some of the starch gelatinized in the extruder during extrusion is physically and/or thermally modified into forming at least 10% starch-based water soluble binder, preferably least 10% water-soluble carbohydrate polymer binder, and more preferably at least 10% cold water soluble starch or starch-based binder in each extruded pellet 28a by pellet weight that functions as a water-soluble clumping agent that preferably is an amount great enough in each extruded granular absorbent pellet 28a to self-clump at least a plurality of pairs of pellets 28a, without the presence of any other clumping agent or binder, into forming an agglutinated mass of the pellets 38 when the at least a plurality of pairs of the pellets 28a are wetted with water or urine. No additional moisture or water is added to the admixture while in the extruder 22 during starch gelatinization and pellet extrusion. In one preferred admixture, the at least at least 35% starch, preferably at least 40% starch, and more preferably at least 45% starch by dry admixture weight is provided from whole grain sorghum having a moisture content no greater than 18%, preferably no greater than 15%, and more preferably no greater than about 14% ± 1 % by weight of the admixture, with a preferred admixture composed of at least 50% whole grain sorghum, preferably at least 65% whole grain sorghum, and more preferably at least 75% whole grain sorghum by dry admixture weight with the entirety of such an admixture having a total moisture content of no greater than 18%, preferably no greater than 15%, and more preferably no greater than about 14% ± 1% by weight of the admixture. No additional moisture or water is added to the admixture while in the extruder 22 during starch gelatinization and pellet extrusion. In such a preferred sorghum-containing admixture and granular absorbent extrusion method, each one of the extruded pellets 28a preferably has enough starch-based water soluble binder that at least some of the water-soluble binder forms a flowable adhesive when pellets 28a are wetted that flows from, around and in between each wetted pellet 28a and at least one other pellet 28a adjacent thereto, adjoining therewith, or in contact therewith. In another preferred admixture, the at least at least 35% starch, preferably at least 40% starch, and more preferably at least 45% starch by dry admixture weight is provided from corn, preferably comminuted or ground corn in the form of cornmeal, and more preferably degermed commeal having a moisture content no greater than 30%, preferably no greater than 25%, and more preferably no greater than about 20% ± 2.5% by weight of the admixture, with a preferred admixture composed of at least 50% of the com, preferably cornmeal, and more preferably degermed cornmeal, preferably at least 65% of the com, preferably cornmeal, and more preferably degermed cornmeal, and more preferably at least 75% of the com, preferably cornmeal, and more preferably degermed commeal by dry admixture weight with the entirety of such an admixture having a total moisture content of no greater than 30%, preferably no greater than 25%, and more preferably no greater than about 20% ± 2.5% by weight of the admixture. In such a preferred commeal-containing admixture and granular absorbent extrusion method, each one of the extruded pellets 28a preferably has enough starch-based water soluble binder that at least some of the water-soluble binder forms a flowable adhesive when pellets 28a are wetted that flows from, around and in between each wetted pellet 28a and at least one other pellet 28a, preferably at least a plurality of other pellets 28a, disposed adjacent thereto, adjoining therewith, or in contact therewith. No additional moisture or water is added to the admixture while in the extruder 22 during starch gelatinization and pellet extrusion. A scoopable clump is formed of such an agglutinated mass of such wetted pellets 28a within two minutes of the plurality of pairs of pellets 28a being wetted that is scoopable from other surrounding unwetted pellets 28a of extruded granular absorbent litter in a litter box and which is an agglutinated mass of the pellets 28a that produces a hardened clump of the pellets 28a when the agglutinated pellet mass is dried to a moisture content of no greater than about 12% ± 2%, preferably less than 12%, by clump weight having a clump compressive crush strength of at least at least 1378 kPa (200 PSI), preferably at least 2413 kPa (350 PSI), and more preferably at least 3447 kPa (500 PSI) and a clump retention rate of at least 90%, preferably at least 92%, and more preferably at least 95%.

The cooling and drying subsystem 34 of the pellet cold-processing arrangement 32 of the extruded granular absorbent production system 20 includes a pellet cooling air blower 52 in fluid-flow communication via an extruded pellet coolant gas conveying duct 54 with the chamber 50 of the pellet collector 48, e.g., pellet-collecting enclosure 48 that supplies gaseous coolant, preferably cooling air, at a temperature of at least 37°C (100°F) less than the temperature of the pellets 28a exiting the extruder die 42 during operation of the extruder 22 during pellet extrusion. The pellet cooling air blower 52 preferably is a centrifugal fan or squirrel cage blower that draws in ambient air at a temperature no higher than 37°C (100°F), preferably no higher than 32°C (90°F), and more preferably no higher than 26°F (80°F) at a volumetric flow rate high enough to relatively rapidly transport the extruded pellets 28a immediately upon extrusion from the extruder die 42 via a pellet conveying duct 56 of a pneumatic pellet conveyor 58 to a post-extrusion pellet processing device 60 of the post-extrusion granular absorbent pellet processing subsystem 36 while also rapidly cooling and preferably also drying the pellets 28a during pneumatic conveyor transport. In a preferred pellet cold-processing method and cooling and drying subsystem 34 of the pellet cold-processing arrangement 32, the blower 52 turbulently conveys ambient air externally, e.g., outside, of the extruder 22 and chamber 50 through the coolant duct 54 to the chamber 50 which is or functions as a pellet cooling chamber 50 at a high enough volumetric flow rate to cold process the pellets 28a and cool the pellets 28a immediately upon extrusion from the extruder die 42 at a pellet coolant rate of at least at least 5°C (10°F), preferably at least at least 7°C (15°F), and more preferably at least 10°C (20°F) per second of time, for at least one second and preferably for at least two seconds, after extrusion of transport of the extruded pellets 28a from the extruder die 42 through the pellet cooling chamber 50 and into the pellet conveying duct 56 of the pneumatic conveyor while maintaining a post-extrusion pellet moisture content of the pellets 28a to less than 14%, preferably less than 12%, and more preferably less than about 10% ± 1% by pellet weight. In a preferred pellet cold-processing method and embodiment, the blower 52 conveys ambient air at a temperature no higher than 37°C (100°F), preferably no higher than 32°C (90°F), and more preferably no higher than 26°F (80°F) through the pellet coolant duct to the pellet cooling chamber 50 at a volumetric flow rate of at least 7 CMM (250 CFM), preferably at least 14 CMM (500 CFM), and more preferably at least 22 CMM (800 CFM), that convectively cools the pellets via turbulent convective cooling at such an aforementioned cooling rate immediately upon pellet extrusion to preserve the state of the starches in the pellets 28a modified by or during extrusion.

In a preferred embodiment, pellet cooling ambient air delivered at such temperatures and volumetric flow rates into the pellet cooling chamber 50 of the pellet collecting enclosure 48, which also serves as the knife cage 46, substantially completely freezes the state and structure of the modified starches in the pellets 28a immediately upon being extruded from the holes in the die 42 of the extruder 22 in a cold-processing method that thereafter advantageously preserves or maintains the state and structure of the modified starches of the pellets 28a including during and preferably after post-extrusion processing of the pellets 28a by the pellet processing device 60 of the pellet processing subsystem 36. In such a preferred embodiment, the cooling and drying subsystem 34 of the pellet cold-processing arrangement 32 delivers pellet coolant air at one or more such aforementioned low temperatures and volumetric flow rates into the pellet cooling chamber 50 such that quenching of the pellets 28a occurs after extrusion of the pellets 28a from the holes of the die 42 of the extruder 22 while the pellets 28a reside in the chamber 50 substantially completely freezing the state and/or structure of the starches in the pellets 28a physically and/or thermally modified during starch gelatinization and/or extrusion by the extruder 22. Such rapid cooling and preferably quenching of the pellets 28a occurs immediately upon being expelled or discharged from the die 42 of the extruder 22 while in the pellet cooling chamber 50, e.g. pellet quenching chamber 50, such that the starch-based water-soluble binder, including any starch-based cold water soluble binder, formed in each pellet 28a from starch, preferably gelatinized starch, during starch gelatinization and/or extrusion is substantially completely preserved maximizing the amount of starch-based water-soluble binder, including any cold water soluble binder, available in each extruded pellet 28a to serve as starch-based water-soluble binder pellet clumping agent to clump together wetted pellets 28a during granular absorbent use, e.g. during use as litter.

In such a preferred method and embodiment, the pellet cooling chamber 50, e.g., pellet quenching chamber 50, is substantially airtight with the enclosure 48 provided by the knife cage 46 being of substantially gas tight construction. Where of gas tight or airtight construction, the walls that form the knife cage 46 and/or chamber 50 preferably are of imperforate or substantially imperforate construction.

Such a pellet cold-processing arrangement 32, including its pellet cooling and drying subsystem 34, can be constructed, arranged, and/or configured in accordance with one or both of the granular absorbent system and method for treating or processing granular absorbent during granular absorbent transport described and shown in commonly owned U.S. Application Serial No. 14/605,045 and published as U.S. Patent Application Publication No. US 20150145164 A1 and the quenched granular absorbent system and method for making quenched granular absorbent described and shown in commonly owned U.S. Application Serial No. 15/114,069 and published as U.S. Patent Application Publication No. US 20160346981 A1.

In a preferred method and embodiment, such cold-processing of the pellets 28a occurs from immediately upon pellet extrusion all the way until the pellets 28a are conveyed via the pellet conveying duct 56 of the pneumatic pellet conveyor 58 by the pellet coolant air to the pellet processing device 60 of the pellet processing subsystem 36 substantially continuously cooling and drying the pellets 28a the entire way until the pellets 28a reach the pellet processing device 60. Not only does such cold-processing of the pellets 28a substantially completely freeze, preserve and/or maintain the extruder-modified starches, including the water-soluble binder, in each extruded pellet 28a from the instant each pellet 28a is extruded from the extruder into the pellet cooling chamber 50, e.g. pellet quenching chamber 50, but the cooling and drying of each pellet 28a from the time of extrusion until being post-extrusion processed, including by pellet processing device 60, helps preserve and maintain these extruder-modified starches, including the water-soluble binder, present in each pellet 28a during such post-extrusion processing, including by the pellet processing device 60.

In use and operation of the cold processing arrangement 32, including its cooling and drying subsystem 34, each one of the pellets 28a is not only cooled from the time the pellet 28a is extruded from the extruder 22 but each one of the pellets 28a also is dried from the time the pellet is extruded from the extruder 22. As previously discussed, each one of the pellets 28a is both cooled and dried substantially continuously from the time of pellet extrusion preferably until being post-extrusion processed, e.g., by post-extrusion pellet processing device 60, of the post-extrusion pellet processing subsystem 36 preferably by the pellet cooling air that cools and dries the extruded pellets 28a while being conveyed by the airstream of pellet cooling air via the pellet conveying duct of the pneumatic conveyor to the point where post-extrusion pellet processing begins or takes place.

In implementing the cold-processing embodiment and carrying out the cold-processing method, drying of the pellets 28a takes place from the time of extrusion all the way until post-extrusion pellet processing without applying any heat to the pellets 28a and without heating, e.g. heating by external means, the stream of pellet cooling air conveying the pellets 28a to the post-extrusion pellet processing subsystem 36 with each cooled and dried pellet 28a preferably having a moisture content of no greater than about 12% ± 2% when entering the post-extrusion pellet processing subsystem 36 and/or being post-extrusion pellet processed by the subsystem 36, e.g. by pellet processing device 60. As a result of cold-processing each extruded pellet 28a upon and after extrusion and preferably up until reaching the post-extrusion pellet processing subsystem 36, any changes to the state, structure, phase and/or matrix of starches present in the pellets 28a during post-extrusion processing are minimized and preferably substantially completely prevented.

As discussed in more detail below, any post-extrusion processing of the pellets 28a in the post-extrusion pellet processing subsystem 36, including by post-extrusion pellet processing device 60, preferably is carried out while maintaining the pellets 28a undergoing post-extrusion processing in a substantially cold-processed condition where the temperature of the pellets 28a immediately after post-extrusion processing is within ± 2°C (± 5°F) to thereby help preserve the state, structure, phase and/or matrix of the extruder-modified starches, including the starch-based water soluble binder, in the post-extrusion processed pellets 28a. In a preferred post-extrusion processing method and implementation, performing post-extrusion pellet processing of the extruded pellets 28a while maintaining the pellet substantially in their cold processed condition advantageously maximizes the amount of starch-based water soluble binder, including any cold water soluble binder, present or which remains present in the post-extrusion processed pellets 28a after post-extrusion processing is completed.

With continued reference to Figure 1, post-extrusion processing of each cold-processed extruded pellet 28a is carried out by the post-extrusion pellet processing subsystem 36, e.g., by post-extrusion pellet processing device 60, in a manner that minimizes and preferably substantially completely prevents compressing or crushing of the pellets 28a during undergoing post-extrusion pellet processing in the subsystem 36 thereby advantageously minimizing and preferably substantially completely preventing any change in the state, structure, phase and/or matrix of starches, including the extruder-modified starches, present in the pellets 28a due to physical contact and/or mechanical interaction, including any mechanical engagement, with any of the pellets 28a during or as a result of post-extrusion pellet processing. Such post-extrusion processing of each cold-processed extruded pellet 28a preferably also is carried out by the post-extrusion pellet processing subsystem 36, e.g., by pellet processing device 60, without application of any heat from any heat source, e.g., heat-generation source, electrical heating element(s), air heater, or the like, prior to, during or after post-extrusion pellet processing of the pellets 28a in the post-extrusion pellet processing subsystem 36, e.g. by pellet processing device 60, thereby advantageously minimizing and preferably substantially completely preventing any change in the state, structure, phase and/or matrix of starches, including the extruder-modified starches, present in the pellets 28a during or as a result of post-extrusion pellet processing. Such post-extrusion processing of each cold-processed extruded pellet 28a preferably is further carried out by the post-extrusion pellet processing subsystem 36, e.g., by pellet processing device 60, in a manner that minimizes and which preferably substantially completely prevents generation or conduction of heat in or to any of the pellets 28a undergoing post-extrusion pellet processing in the post-extrusion pellet processing system 36, e.g. by pellet processing device 60, thereby advantageously further minimizing and preferably substantially completely preventing any change in the state, structure, phase and/or matrix of starches, including the extruder-modified starches, present in the pellets 28a during or as a result of post-extrusion pellet processing.

With continued reference to Figure 1, a preferred embodiment of a post-extrusion pellet processing subsystem 36 employs a post-extrusion pellet processing device 60 that is a post-extrusion mechanical-engagement pellet processing device 62 that comminutes the extruded pellets 28a arriving in a cold-processed condition in accordance with that disclosed above with the pellets 28a preferably delivered in such a cold-processed processed condition to the device 60 where the pellets 28a have a pellet temperature that is at least 35°C (65°F) less, preferably at least 40°C (75°F) less, and more preferably at least 70°C (90°F) less than the temperature of the pellets 28a upon extrusion from the extruder die 42, i.e., pellet extrusion temperature, and a pellet moisture content of no greater than about 12% ± 2% of pellet weight. When the extruded pellets 28a arrive at the pellet processing device 60 in such a cold-processed condition ready for post-extrusion mechanical-engagement pellet processing, e.g., post-extrusion pellet comminution, each pellet 28a preferably has a temperature no greater than 63°C (145°F), preferably no greater than 55°C (130°F), and more preferably no greater than about 50°C ± 2.5°C (120°F ± 5°F) and has a moisture content no greater than about 10% ± 1% of pellet weight.

A preferred post-extrusion mechanical-engagement pellet processing device 62 well suited for mechanical-engagement pellet processing via pellet comminution is the pellet comminution machine 64 schematically depicted in Figure 1 that can be a slicing or cutting pellet processing machine used to form generally longitudinal and/or transverse cuts or slits in the outer surface of the pellets 28a during mechanical-engagement comminution-type pellet processing, but which more preferably is a comminution mill 66, such as a jet mill, cone mill, or vibration mill, constructed and arranged and/or otherwise configured to mechanically engage the pellets 28a in the cold processed condition as the pellets 28a enter the device 64 or mill 66 in a manner that abrades the pellets 28a, removes at least a portion of an outer surface or skin of one or more of the pellets 28a, shears or tears open one or more of the pellets 28a exposing at least a portion of the pellet interior(s), e.g. inner void-filled pellet matrix, and/or severs or lops off one or more lobes, fibrils, fingers or other projections extending outwardly from the outer surface of pellets 28a being post-extrusion processed by device 64 or mill 66, or otherwise mechanically engages and comminutes pellets 28a passing through the device 64 or mill 66 during post-extrusion pellet processing. Whether the post-extrusion mechanical-engagement comminution type pellet processing device 62 is a pellet slicer or pellet cutter type comminution machine 64 that mechanically engages and comminutes pellets 28a passing through the machine 64 during post-extrusion pellet processing, or is a pellet comminution mill 66, the machine 64 or mill 66 used in post-extrusion mechanical-engagement pellet processing preferably comminutes the pellets 28a in a manner that minimizes and preferably substantially completely prevents pulverizing pellets 28a, crushing pellets 28a and otherwise compressing, e.g. mashing or smashing, pellets 28a during post-extrusion pellet processing.

As such, a post-extrusion pellet processing subsystem 36 employs a non-pulverizing, non-crushing, non-compacting and non-compressing post-extrusion mechanical-engagement comminution type pellet processing device 62 that mechanically engages and comminutes pellets 28a passing through the device 62 in a manner that cuts, slits, shears, tears, opens, severs and/or lops off one or more portions of pellets 28a passing through the device 62 during such post-extrusion processing of the pellets 28a. Likewise, whether the device 62 is a pellet slicer or pellet cutter comminution machine 64 or a pellet comminution mill 66, such a pellet slicer or pellet cutter comminution machine 64 also is a non-pulverizing, non-crushing, non-compacting and non-compressing pellet slicing or pellet cutting machine 64 and such a pellet comminution mill 66 also is a non-pulverizing, non-crushing, non-compacting and non-compressing pellet comminution mill 66.

Post-extrusion mechanical-engagement comminution type processing of the pellets 28a while in a cold processed condition advantageously enables portions of one or more of the pellets 28a passing through the non-pulverizing, non-crushing, non-compacting and non-compressing mechanical-engagement comminution type pellet processing device 62, whether the device 62 is a non-pulverizing, non-crushing, non-compacting and non-compressing pellet slicing or pellet cutting machine 64 and/or a non-pulverizing, non-crushing, non-compacting and non-compressing pellet comminution mill 66, modification of the state, structure, phase, or matrix of the extruder-modified starches in the pellets 28a passing through during such post-extrusion processing is minimized and preferably substantially completely prevented. By cooling and drying the pellets 28a prior to and preferably up to or adjacent entry into the pellet processing device 62, e.g., pellet cutter/slicer machine 64 and/or pellet comminution mill 66, post-extrusion physical modification of the previously extruder modified starches, including the water-soluble starch-based binder, e.g., water-soluble starch-based carbohydrate polymer binder clumping agent, is advantageously minimized and preferably substantially completely prevented during such mechanical engagement comminution type post-extrusion pellet processing. In addition, use of a non-pulverizing, non-crushing, non-compacting and non-compressing mechanical engagement comminution type post-extrusion pellet processing device 62, preferably either a non-pulverizing, non-crushing, non-compacting and non-compressing pellet cutter/slicer machine 64 or a non-pulverizing, non-crushing, non-compacting and non-compressing pellet comminution mill 66, minimizes the amount and/or nature of the mechanical engagement, physical contact, and/or comminution of the pellets 28a passing through the device 62, e.g. pellet cutter/slicer machine 64 and/or pellet comminution mill 66, thereby advantageously also helping to minimize and preferably helping to substantially completely prevent post-extrusion physical modification and/or thermal modification of such starches in the pellets 28a that were previously physically and/or thermally modified by the extruder 22 during or by gelatinization and/or extrusion.

During such post-extrusion mechanical engagement and/or comminution-type processing of the as-extruded original sized pellets 28a by device 62, e.g. pellet cutter-slicer machine 64 or pellet comminution mill 66, of such a preferred post-extrusion pellet processing subsystem 36 in carrying out a method of post-extrusion mechanical engagement and/or comminution type processing of original-sized extruded pellets 28a advantageously minimizes and preferably prevents post-extrusion physical modification and/or post-extrusion thermal modification thereby helping to retain, preserve, optimize and preferably maximize the amount, magnitude and/or type of extruder-modified starches present and/or formed in the pellets 28a by or during gelatinization and/or pellet extrusion by extruder 22 which further advantageously maintains and preferably optimizes (a) liquid absorption, including absorption of water, urine, liquid fecal matter, and hydrocarbon/petroleum-based oil(s), (b) pellet structural integrity, and/or (c) wetted pellet clumping of the comminuted reduced particle size pellets 28b and smaller more finely sized pellet particles 28c, e.g., fines 28c, produced as a result of comminution of the original-sized and/or as-extruded pellets 28a by device 62, e.g. e.g. pellet cutter/slicer machine 64 and/or pellet comminution mill 66, during post-extrusion mechanical engagement and/or comminution type pellet processing.

Such post-extrusion mechanical-engagement and/or comminution-type processing of the cold processed extruded pellets 28a in carrying out a preferred implementation of such a post-extrusion pellet processing method can be and preferably is performed by comminuting pellets 28a as they pass through the device 62, e.g. pellet cutter/slicer machine 64 and/or pellet comminution mill 66, thereby physically modifying at least one of (a) a portion of the outer pellet surface, (b) the shape, and/or (c) the size of one or more as-extruded pellets 28a during such post-extrusion pellet processing producing one or more at least slightly smaller sized pellets 28b and/or smaller more finely sized pellet particles 28c, e.g., fines 28c comminuted from one or more such original-extruded pellets 28, that are discharged from the device 62, e.g. pellet cutter/slicer machine 64 and/or pellet comminution mill 66. Thereafter, the reduced size pellets 28b and fines 28c are then transported, such as preferably via a second pellet conveying duct 68 from the device 62, e.g. pellet cutter/slicer machine 64 and/or pellet comminution mill 66, of the pneumatic conveyor 58 such that cold-processing air cooling and non-heated convection air drying of the pellets 28 entering the device 62, e.g. pellet cutter/slicer machine 64 and/or pellet comminution mill 66, also is carried out, is performed, or otherwise resumes for the comminuted reduced-size pellets 28b and even smaller sized fines 28c. As such, cold-processing air cooling and non-heated convection air drying of the comminuted reduced-size pellets 28b and even smaller sized fines 28c preferably is carried out until the pellets 28b and fines 28c reach a further post-extrusion pellet processing station 70 depicted in Figure 1 for purposes of example as including or being a pellet holding container 72, such as a bin, bag, hopper or the like, located downstream of the mechanical-engagement comminution type pellet processing device 62 in which the size-reduced pellets 28b and even smaller sized fines 28c are collected after being discharged from device 62, e.g. pellet cutter/slicer machine 64 and/or pellet comminution mill 66, after post-extrusion mechanical-engagement and/or comminution-type pellet processing of the as-extruded pellets 28a has been performed.

In a preferred method implementation and embodiment of a post-extrusion mechanical-engagement and/or comminution-type pellet-processing subsystem 36, it is contemplated that not all of the originally extruded pellets 28a will be comminuted by the mechanical-engagement comminution type pellet processing device 62 such that the container 72 of the further downstream post-extrusion pellet processing station 70 is depicted in Figure 1 as also holding at least a plurality of pairs, i.e. at least three, of as-extruded pellets 28a together with at least a plurality of pairs, i.e., at least three, of the particle-size reduced pellets 28b and at least a plurality of pairs, i.e., at least three, of the of the smaller sized fines 28c. In one such preferred method implementation and embodiment, as-extruded pellets 28a are discharged from the extruder 22 in real time during extruder 22 and system 20 operation where the as-extruded pellets 28a are cold-process cooled and dried by pellet cold processing arrangement 32 before being post-extrusion processed by post-extrusion mechanical-engagement and/or comminution type pellet processing subsystem 36 also in real time followed by discharge of at least a plurality of and preferably at least a plurality of pairs, i.e. at least 3, of different sized pellets or particles, e.g. pellets 28a and/or 28b and/or fines 28c, formed of or from the as-extruded pellets 28a during post-extrusion pellet processing that are received in the container 72 of the downstream station 70. While only one size or type of smaller sized fines 28c our depicted in Figure 1 as being formed by comminution of an as-extruded pellet 28a by post-extrusion processing thereof by the mechanical-engagement comminution type pellet processing device 62, at least a plurality of differently sized smaller fines instead of or in addition to the fines 28c depicted in Figure 1 preferably are produced from pellet comminution of as extruded pellets 28a. Additionally, comminution of the as-extruded pellets 28a by device 62 can and preferably also does produce at least a plurality of differently sized particle size reduced pellets instead of or in addition to the particle size reduced pellets 28b depicted in Figure 1. As such, in a preferred method and system of post-extrusion mechanical-engagement and/or comminution type pellet processing, at least 2 different sized reduced-sized pellets and at least 2 different sized fines are produced during or from such post-extrusion mechanical-engagement and/or comminution type pellet processing by device 62 instead of or in addition to particle reduced size pellet 28b and fines 28c preferably producing a finished granular absorbent product ready for retail sale, consumer use and/or commercial use composed of a blend of at least 3 differently sized pellets and/or fines, preferably is composed of a blend of at least 4 differently sized pellets and/or fines, and more preferably is composed of a blend of at least 5 differently sized pellets and/or fines.

With continued reference to Figure 1, container 72 of station 70 preferably holds at least a plurality of pairs of reduced-size pellets 28b and at least a plurality of pairs of even smaller size fines 28c per cubic centimeter of volume of the container 72 as the container 72 is filled therewith during real time operation of the system 20 in carrying out a preferred method implementation. In another preferred method implementation and embodiment, container 72 of station 70 preferably holds (a) at least a plurality of pairs of as-extruded pellets 28a that have not been size-reduced during post-extrusion pellet processing by device 62 of subsystem 36, (b) at least a plurality of pairs of reduced-size pellets 28b, and (c) at least a plurality of pairs of even smaller size fines 28c per cubic centimeter of volume of the container 72 when filled therewith during real time operation of the system 20.

If desired, container 72 of pellet processing station 70 can include or be configured to further process pellets 28a and/or 28b and/or fines 28c that have been discharged from the post-extrusion pellet processing subsystem 36 where the pellets 28a and/or 28b and/or fines 28c can be and preferably are further processed, such as by being coated with one or more coating materials, e.g. powdered bentonite, zeolite, silica, and/or other coating materials, by being stored in a container, such as in a bulk bag or bin for later shipment and/or subsequent packaging as at least part of a granular absorbent product, and/or is blended and/or packaged with other granular materials in a granular absorbent product produced that is composed of at least 50%, preferably at least 65% and more preferably at least 75% of the comminuted reduced-sized pellets 28b and the even smaller sized fines 28c formed during post-extrusion mechanical engagement and/or comminution type pellet processing of the as-extruded extruded pellets 28a.

It is therefore contemplated that the processing station 70 schematically shown in Figure 1 located at the end of the cold-process air cooling and non-heated convective, preferably turbulently convective, air drying pneumatic pellet transporting conveyor 58 can be or otherwise include a pellet or particle size separating or classifying station, a pellet or granular blender or blending station, a mixer or mixing station, a pellet or particle coater or coating station, an agglomerator, a bulk bag or bulk bin filling station, a retail container or retail bag packaging line or station, or can be another type of pellet 28b and/or fines 28c processing station, including another post-extrusion mechanical-engagement and/or comminution-type pellet processing device, such as a pellet cutter, pellet slicer, or pellet comminution mill that preferably is of non-pulverizing, non-crushing, non-compacting and non-compressing construction and operation. If desired, a system and method can and preferably does further contemplate one or more additional such processing stations, e.g., comminution device 62 and/or station 70, not shown in Figure 1 downstream of and linked to processing station 70, such as by another duct (not shown) of pneumatic conveyor 58 and/or by another pellet or particulate matter transport device or mechanism (not shown).

Figure 2 illustrates another preferred embodiment of an extruded granular absorbent production system 20' that is similar to the system 20 shown in Figure 1 but which employs a pellet comminuting particle size reducer 62 that preferably is a rotating roll type pellet comminuting mill 65 as the pellet processing device 60' of post-extrusion pellet processing subsystem 36'. In addition, the cold-processing arrangement 32' has a cooling and drying subsystem 34' that includes a second coolant air conveying duct 74 in gas flow communication with the pellet particle size reducer 62 for cold processing as-extruded pellets 28a in real time as the pellets 28a are being processed, e.g. comminuted, by the particle size reducer 62 to minimize and preferably substantially completely prevent any increase in the temperature of the pellets 28a as they are being processed by the particle size reducer 62.

While the coolant air conveying duct 74 can also be in gas flow communication with the pellet cooling air blower 52, the duct 74 preferably is separately supplied with pellet coolant gas, preferably ambient air having a temperature no higher than 37°C (100°F), preferably no higher than 32°C (90°F), and more preferably no higher than 26°F (80°F) at a volumetric flow rate great enough to maintain the temperature of the pellets 28a during processing, e.g., particle-size reduction, by the pellet particle size reducer 62 at substantially the same temperature as the pellet entry temperature of the pellets 28a entering the pellet particle size reducer 62 such that the pellets 28a, reduced particle size pellets 28b, and even smaller sized fines 28c have an exit temperature upon exiting the particle size reducer 62 that is substantially the same as the pellet entry temperature. In the preferred embodiment of the pellet cooling and drying subsystem 34', the subsystem 34' preferably includes a particle size reducer pellet cooling arrangement 76 that includes a blower 78, such as a centrifugal fan or squirrel cage blower, which draws in ambient air outside of the extruder 22 and pellet particle size reducer 62 and discharges it inside the pellet particle size reducer 62 at or adjacent where the pellets 28a are being comminuted and/or particle size reduced under a high enough pressure and/or at a volumetric flow rate sufficiently great to at least maintain the temperature of the as extruded pellets 28a being particle size reduced by the reducer 62 and the temperature of the reduced sized particle pellets 28b and fines 28c formed by the reducer 62 during pellet particle size reduction as discussed hereinabove. In one preferred embodiment and method, operation of the particle size reducer cooling arrangement 76 directs a great enough volumetric flow rate of pellet cooling air into the pellet particle size reducer 62 such that the temperature of the as-extruded pellets 28a, particle size reduced pellets 28b, and fines 28c have a discharge temperature upon exiting the reducer 62 that is at least 0.56°C (1°F) and preferably at least 1°C (1.8°F) lower than the pellet entry temperature of the as extruded pellets 28a entering the reducer 62.

Where equipped with a coolant air conveying duct 74 that supplies ambient pellet cooling to the interior of the pellet particle size reducer 62, cold processing air cooling and convective air drying, preferably turbulently convective air drying, of the pellets 28a continues substantially uninterrupted during entry of the as-extruded pellets 28a into the pellet particle size reducer 62, during particle size reduction comminution of the as-extruded pellets 28a by the pellet particle size reducer 62, and preferably also as the pellets 28a and 28b and fines 28c exit the pellet particle size reducer 62. Depending upon the volumetric air flow rate and the sizing of the pellet conveying duct 68 of the pneumatic conveyor 58 extending downstream from the pellet particle size reducer 62, the pellet cooling air conveyed by or through the coolant air conveying duct 74 into the pellet particle size reducer 62 can also be used to pneumatically direct the pellets 28a and/or 28b and fines 28c being discharged from the pellet particle size reducer 62 into and through the pellet conveying duct 68 advantageously continuing to cold process air cool and air dry the pellets 28a and 28b and fines 28c all the way until they reach the end of the duct 68 and/or processing station 70.

With continued reference to Figure 2, a preferred particle size reduction machine or pellet size reducer 62 is a rotating roll type pellet comminuting mill 65 having a pair of generally horizontal side-by-side elongate pellet-comminuting corrugated rolls 80 and 82, preferably LePage rolls 80 and 82, which can be and preferably are generally parallel to one another and which rotate toward one another with the differential in the rotational speeds and spacing between the counter-rotating rolls 80 and 82 determining the maximum pellet size or pellet size range to which extruded pellets are particle size reduced during post-extrusion pellet processing. One such preferred pellet or particle size reducer 62 is a LePage corrugated roll mill or LePage roll granulator 84 having a pair of such corrugated LePage rolls 80 and 82 that rotate toward one another during size reduction of extruded pellets 28a with one of the LePage rolls 80 being longitudinally corrugated having longitudinally extending corrugations, e.g., longitudinally formed or longitudinally cut corrugations, and the other one of the LePage rolls 82 being circumferentially corrugated having circumferentially spaced apart corrugations extending in a circumferential direction, e.g., circumferentially formed corrugations or circumferentially cut corrugations, with gap and rotational speed differential of the counter-rotating corrugated LePage rolls 80 and 82 comminuting oversized extruded pellets 28a in a manner that shears, severs or lops off outwardly extending or projecting portions of the oversized extruded pellets 28a without pulverizing, crushing, hammering, or otherwise compressing the oversized pellets 28a during particle size reduction. Such a corrugated LePage roll mill or roll granulator 84 constructed with such counterrotating horizontally and circumferentially corrugated rolls 80 and 82 cuts, abrades, severs, shears, shaves or otherwise comminutes outwardly projecting lobes, tendrils, fingers or other portions of oversized pellets 28a being particle sized reduced thereby that extend outwardly of the rest of the outer surface of the oversized pellets 28a with those outwardly extending portions of the oversized pellet 28a severed, lopped off, sheared off, shaved off or otherwise comminuted from the oversized pellet 28a produce the more finely sized fines 28c with the rest of what remains of the previously oversized pellet 28a being a particle size reduced pellet 28b in accordance with the present invention. Performing such non-compression induced particle size reduction using such a particle size reduction roller mill 65 that preferably is a LePage corrugated roll mill or granulator 84 equipped with such horizontally and circumferentially corrugated LePage rollers 80 and 82 advantageously minimizes and preferably substantially completely prevents physical and thermal modification of the extruder-modified starches of extruded pellets contacting the counter-rotating rolls 80 and/or 82, being comminuted by the rolls 80 and/or 82, and/or being particle size reduced by the rolls 80 and/or 82 during particle size reduction operation of the LePage pellet size reduction machine 84.

The present invention is directed to a method, system and processing machine, preferably a pellet size reduction machine, like the pellet or particle size reduction machine 84 shown in Figure 2, which performs particle size reduction of pellets extruded by an extruder from a starch-containing mixture, e.g., admixture, substantially as fast as pellets are extruded from the extruder in a manner that breaks each pellet that undergoes particle size reduction into two or more smaller sized particles all while prevent compression or compaction thereof during particle size reduction. Such a method, system and pellet or particle size reduction machine preferably reduces pellet particle size using non-compression particle size reduction thereby substantially completely preventing pellet and/or reduced size particle densification from occurring such that the bulk density of reduced size particles formed from extruded pellets undergoing particle size reduction is no greater than the bulk density of the extruded pellets undergoing particle size reduction. Such a method, system and pellet or particle size reduction machine preferably reduces pellet particle size via cold-processing pellet or particle size reduction whereby the temperature of each pellet undergoing non-compression particle size reduction does not substantially increase during non-compression particle size reduction such that the temperature of reduced size particles exiting the particle size reduction machine is no greater than four degrees Celsius hotter than the temperature of extruded pellets entering the particle size reduction machine.

In a preferred method of making extruded pellets well suited for use with the method, system and particle size reduction machine of the present invention, pellets preferably are extruded from a starch-containing admixture formed substantially completely of one or more cereal grains, which can also include cellulosic material, using an extruder in accordance with the method and arranged disclosed in United States Patent Application Publication No. 20150196005, and/or United States Patent Application Publication No. 20150145164. In one such preferred extruded pellet making method, pellets are extruded from an admixture composed substantially completely of corn, preferably cornmeal which can be de-germed cornmeal, which can include no more than 35% cellulosic material by admixture weight, which has an admixture moisture content no greater than 25% by admixture weight, which is gelatinized and extruded by a single screw extruder at an extrusion temperature at the extrusion die of at least 100°C (212°F), preferably at least 110°C (230°F), and more preferably at least 125°C(257°F), and at an extrusion pressure at the extrusion die of at least 12410 kPa (1800 PSI), preferably at least 13789 kPa (2000 PSI), and more preferably at least 17236 kPa (2500 PSI). In another such preferred extruded pellet making method, pellets are extruded from an admixture composed substantially completely of sorghum, preferably whole grain sorghum which can be and preferably is degermed, which can include no more than 35% cellulosic material by admixture weight, which has an admixture moisture content no greater than 20% by admixture weight, which is gelatinized and extruded by a single screw extruder at an extrusion temperature at the extrusion die of at least 100°C (212°F), preferably at least 120°C (248°F), and more preferably at least 135°C (275°F), and at an extrusion pressure at the extrusion die of at least 13789 kPa (2000 PSI), preferably at least 17236 kPa (2500 PSI), and more preferably at least 20684 kPa (3000 PSI).

Pellets extruded from such an admixture in accordance with such preferred methods and extruder operating parameters each advantageously contain an amount of starch modified by or during extrusion into water soluble binder that preferably is cold water soluble binder in an amount sufficient to cause at least a plurality of pairs of wetted pellets to clump together and form clumps when dried to a moisture content of no greater than 25% by dried clump weight that have a clump compressive strength of at least 2068 kPa (300 PSI), preferably at least 2757 kPa (400 PSI), and more preferably at least 4826 kPa (700 PSI). Pellets extruded from such an admixture in accordance with such preferred methods and extruder operating parameters each advantageously contain an amount of starch modified by or during extrusion into water soluble binder that preferably is cold water soluble binder sufficient to cause at least a plurality of pairs of wetted pellets to clump together define self-clumping pellets producing self-clumping granular absorbent that is well suited for use in animal, pet and cat litter applications as self-clumping litter. Such extruded granular absorbent, including when used as litter, preferably is all-natural, biodegradable, and toilet-flushable.

Pellets extruded from such an admixture in accordance with such preferred methods and extruder operating parameters each advantageously contain an amount of starch modified by or during extrusion into water soluble binder, preferably cold water soluble binder, sufficient to cause at least some of the water soluble binder in wetted pellets to become flowable and form a flowable adhesive binder that flows from wetted pellets around and between at least a plurality of pairs of adjacent pellets binding and clumping them together producing self-clumping extruded granular absorbent. Where used as litter, pellets extruded from such an admixture in accordance with such preferred methods and extruder operating parameters each advantageously contain an amount of starch modified by or during extrusion into water soluble binder, preferably cold water soluble binder, sufficient to cause at least some of the water soluble binder in wetted pellets to become flowable and form a flowable adhesive binder that flows from wetted pellets around and between at least a plurality of pairs of adjacent pellets binding and clumping them together producing self-clumping litter. Such extruded granular absorbent, including when used as litter, preferably is all-natural, biodegradable, and toilet-flushable.

Where used in its as-extruded form, even after particle size reduction in accordance with the present invention has been performed, extruded pellets of such self-clumping granular absorbent, including when used as self-clumping litter, each have at least 7.5% cold water soluble binder by extruded pellet weight with at least some of an outer surface of each extruded pellet being composed of cold water soluble binder. Where particle size reduction has been performed in accordance with the present invention, each size reduced particle formed from extruded pellets that undergo particle size reduction also possess at least 7.5% cold water soluble binder by extruded pellet weight. In at least one granular absorbent embodiment, extruded pellets along with any reduced size particles formed of extruded pellets that underwent particle size reduction in accordance with the present invention contain at least 10% cold water soluble binder. In at least one other granular absorbent embodiment, extruded pellets along with any reduced size particles formed of extruded pellets that underwent particle size reduction in accordance with the present invention contain at least 15% cold water soluble binder. Such extruded granular absorbent, including when used as litter, preferably is all-natural, biodegradable, and toilet-flushable.

In a preferred extruded pellet making method pellets extruded from such admixture(s) in accordance with such preferred method(s) and extruder operating parameter(s) set forth above each advantageously contain an amount of starch physically and/or thermally modified by or during extrusion into cold water soluble binder in an amount sufficient to cause at least a plurality of pairs of wetted pellets to clump together and form clumps having a clump compressive strength of at least 2068 kPa (300 PSI), preferably at least 2757 kPa (400 PSI), and more preferably at least 4826 kPa (700 PSI) when compression strength tested in accordance with the litter clump compression strength test procedure set forth below:

### Clump Compression Strength Test Procedure

The following equipment was utilized in carrying out extruded granular absorbent (litter) clump compression strength testing:
(1) 15 mL centrifuge tubes with screw top caps, plastic
(2) 3.0 mL disposable pipettes, plastic
(3) Distilled water
(4) Force Gauge: Mark-10 Model M7-500 S/N 3674412
(5) Motorized test stand: Model ESM303 S/N 3979431
(6) Digital control panel: Mark-10 Model DC4060 S/N 3680222
(7) DREMEL hand held high speed rotary power tool with deep cutting wheel
(8) Samples of extruded granular absorbent material (extruded pellets) to be wetted to form clumps therefrom to be compression strength tested

Using the above, the following methodology was utilized in performing extruded granular absorbent (litter) clump compressive strength testing:
(1) Saw off tapered end of a 15 mL test tube, and clean off burrs.
(2) Screw on cap of test tube and fill tube with sample material to be tested.
(3) Add distilled water to sample material in test tube (1: 1 by weight) to wet sample material
(4) Wait 10 seconds
(5) Unscrew cap from test tube and gently push "cast" clump formed of wetted sample material out of test tube using bulbous end of a plastic pipette (snug fit).
(6) Let cast clump sit and dry for 5 days at ambient room temperature conditions.
(7) Using deep cutting wheel attached to a DREMEL high speed rotary tool at high speed greater than 10,000 RPM, cut cast clump into barrel-shaped sections each approximately 1.27 cm (0.5 inches) thick or long.
(8) Measure the diameter and length of each barrel shaped cast clump section.
(9) Place barrel shaped cast clump section on middle of compression test stand platform, with flat cut ends of barrel shaped cast clump section on top and bottom for compression testing by force gauge.
(10) Using a compression speed of 1.27 mm/minute (0.5 inches/minute), determine peak compression strength of barrel shaped cast clump section using force gauge.

In a preferred method, system and pellet size reduction machine, such as the LePage corrugated roller equipped particle size reduction machine 84 schematically depicted in Figure 2, particle size reduction is produced by reducing the size of at least a plurality of pellets extruded by at least a plurality of extruders preferably doing so substantially simultaneously upon or right after pellet extrusion. In another preferred method, system and pellet size reduction machine, particle size reduction is substantially simultaneously performed on at least a plurality of pairs of pellets, i.e., at least three, extruded substantially simultaneously by or from at least a plurality of extruders and preferably at least a plurality of pairs of extruders, i.e., at least three extruders, preferably doing so substantially simultaneously upon or right after pellet extrusion and while each one of the extruders is operating (preferably while each is substantially simultaneously discharging at least a plurality of pairs of extruded pellets per second with the particle size reduction machine processing at least a plurality of pairs of extruded pellets from each one of the extruders feeding extruded pellets thereto during each second particle size reduction machine operation).

Particle size reduction is advantageously done in a manner that produces two or more smaller sized particles from each extruded pellet that undergoes particle size reduction where each smaller sized particle has a bulk density no greater than the bulk density of the extruded pellet from which the smaller sized particles were formed. In a preferred method, system and particle size reduction machine of the present invention, such as the LePage corrugated roller equipped particle size reduction machine 84 schematically depicted in Figure 2, each pellet undergoing pellet or particle size reduction is particle size reduced by the particle size reduction machine in a manner that produces (a) a smaller reduced size particle that is smaller in size than the extruded pellet from which the smaller reduced size particle was formed, and (b) at least one finer sized particle or fine(s) produced from the same extruded pellet that is smaller in size than the smaller reduced size particle also produced from the same extruded pellet during particle size reduction thereof. In another preferred method, system and particle size reduction machine of the present invention, each pellet undergoing pellet or particle size reduction is particle size reduced by the particle size reduction machine in a manner that produces at least one smaller sized particle and at least a plurality of fines therefrom. In still another preferred method, system and particle size reduction machine of the present invention, each pellet undergoing pellet or particle size reduction is particle size reduced by the particle size reduction machine in a manner that produces at least one smaller sized particle and at least a plurality of pairs of fines, i.e., at least three fines, therefrom.

In carrying out a preferred method of extruded pellet particle size reduction using a system that preferably includes a non-compression inducing particle size reduction machine in accordance with the present invention, a particle size reduction setting of the particle size reduction machine is set to process extruded pellets larger in size than the particle size reduction setting by reducing pellet size in a manner that breaks up these larger sized pellets into (a) at least one smaller size particle of a size smaller than that of the larger sized pellet from which it was formed, and (b) at least one even smaller size fine of a size smaller than the at least one smaller size particle. In one such preferred method, system and particle size reduction machine embodiment, the particle size reduction machine is set at a particle size reduction setting that produces at least a plurality of fines, preferably at least a plurality of pairs of fines, from each larger size extruded pellet that undergoes particle size reduction by the particle size reduction machine. In such a preferred method, system and particle size reduction machine embodiment, each larger sized extruded pellet that undergoes particle size reduction also forms at least one smaller sized particle having a size larger than each one of the fines produced therefrom in addition to the fines produced thereby.

Changing the particle size reduction setting of the particle size reduction machine, e.g., machine 84, changes the minimum size at or above which extruded pellets and/or any other particle passing through the particle size reduction machine must possess in order to be actually processed by the particle size reduction machine in a manner that preferably reduces pellet size or incoming particle size by breaking off one or more pieces therefrom during particle size reduction. Pellets and any other particles passing through the particle size reduction machine of a size smaller than the particle size reduction setting of the particle size reduction machine preferably pass through the particle size reduction machine substantially completely untouched or unprocessed by the particle size reduction machine.

In a preferred particle size reduction machine embodiment, pellets and any other particles entering the particle size reduction machine pass through substantially untouched where their maximum extent, i.e., largest portion, whether it be the length, width, and/or thickness of the pellet or entering particle, is smaller than or less than the particle size reduction setting of the particle size reduction machine. In such a preferred particle size reduction machine embodiment, pellets and any other particles entering the particle size reduction machine having a maximum extent, i.e., largest portion, whether it be the length, width, and/or thickness of the pellet or entering particle, greater than or larger than the particle size reduction setting of the particle size reduction machine are processed by the particle size reduction machine reducing their particle size via non-compression induced particle size reduction. Such a preferred particle size reduction machine performs non-compression induced particle size reduction by shearing, tearing, cutting, slitting, twisting and/or pulling each larger sized pellet or other larger sized particle of a size greater than the particle size reduction setting of the particle size reduction machine such that the particle size reduction machine thereby shears off one or more pieces or portions therefrom, tears off one or more pieces or portions therefrom, cuts off one or more pieces or portions therefrom, slits one or more pieces or portions therefrom, twists off one or more pieces or portions therefrom, and/or pulls off one or more pieces or portions therefrom.

By reducing the size of pellets and/or other particles of a size greater than the particle size reduction setting of the particle size reduction machine via shearing, tearing, cutting, slitting, twisting and/or pulling particle size reduction is advantageously accomplished without compressing or compacting the larger sized pellet and/or larger sized particle undergoing particle size reduction such that densification does not occur, pores and internal voids remain open and substantially intact, and the matrix of each pellet and/or particle, including the smaller sized particles and fines formed therefrom during particle size reduction, remains substantially unaffected. In addition, because particle size reduction is accomplished through contact or engagement with larger sized pellets and/or larger sized particles that shears, tears, twists, cuts, slits, and/or pulls apart the larger sized pellets and/or larger sized particles undergoing particle size reduction, the bulk density of each smaller sized particle and each one of the fines formed by such particle size reduction has a bulk density no greater than and preferably less than the bulk density of the larger sized pellets and/or larger sized particles prior to undergoing particle size reduction. This shearing action, tearing action, twisting action, cutting action, slitting action and/or pulling apart action on each larger sized pellet and/or larger sized particle undergoing such non-compression induced particle size reduction in accordance with the present invention preferably not only reduces bulk density in the smaller sized particles and fines produced during particle size reduction, but also opens up the void filled interior of each larger sized pellet and/or larger sized particle and all reduced size particles and fines formed therefrom thereby advantageously not only improving and/or increasing absorption during granular absorbent use but also increasing and/or speeding the rate or speed at which absorption or liquid uptake occurs during granular absorbent use.

Such a preferred method, system and particle size reduction machine in accordance with the invention performs such non-compression induced or non-compression particle size reduction in a manner that requires less energy during particle size reduction advantageously minimizing and preferably substantially completely preventing heating of pellets and/or other particles passing through the particle size reduction machine in a manner that substantially changes or otherwise adversely affects or impacts the internal matrix, including starch matrix, of each pellet or particle being particle sized reduced and/or passing through. Heating preferably is minimized sufficiently enough to also prevent starch retrogradation from occurring, to also prevent any change in form or phase of starch from taking place, as well as to also prevent any other change or transition to starch from happening thereby preserving optimal absorbent performance so absorption capacity and/or absorption rate is at least as great in the size reduced particles as the absorption capacity and/or absorption rate of the pellets and/or particles entering the particle size reduction machine. In at least one method implementation, system and/or particle size reduction machine embodiment, such low energy non-compression induced or non-compression particle size reduction carried out by such a particle size reduction machine constructed in accordance with the present advantageously minimizes and preferably substantially completely prevents larger sized pellets and/or larger sized particles undergoing particle size reduction from heating and increasing their temperature by no more than four degrees Celsius, preferably no more than two degrees Celsius, and more preferably no more than one degree Celsius during particle size reduction.

In a preferred method implementation and embodiment, the present invention is directed to a method, system and pellet size reduction machine that preferably is or includes a roll granulator or granulating mill of non-compression induced particle size reduction construction that reduces the size of extruded pellets and/or other granular absorbent granules or particles passing by processing extruded pellets and/or other granular absorbent granules or particles in a manner that performs (a) tensile/tensile stress or force induced particle size reduction, (b) shear or shear stress or force induced particle size reduction, and/or (c) torsion or twisting stress or force induced particle size reduction thereby advantageously substantially completely preventing or avoiding formation of any compressed or compact regions on or in any reduced size particle produced in accordance with the present invention. In a preferred method and system, a preferred roll granulator or granulating mill 84 configured to perform such non-compression induced particle size reduction has a pair of spaced apart rolls, preferably LePage corrugated circle-chill rolls 80 and 82, which rotate during non-compression induced particle size reduction to perform particle size reduction in a manner that shears, pulls apart and/or twists apart pellets having a size wider and/or longer than a preset and preferably selectively variable space or spacing of a gap between the rolls. In a preferred method and embodiment, one of the rolls preferably rotates during particle size reduction at a rotational speed in revolutions per minute that is greater than a rotational speed of the other one of the rolls.

The gap spacing between the rolls can be selectively and preferably relatively precisely varied or set providing a particle size reduction setting of such a roll-type particle size reduction machine of non-compression inducing particle size reduction construction that can be selectively set and/or varied to determine a minimum pellet or particle size at or greater than which an extruded pellet or particle entering the particle size reduction machine must possess or be in order for non-compression induced particle size reduction to be performed by the particle size reduction machine. Varying the particle size reduction setting by selectively setting the space or spacing between the rolls can also be one, including dynamically during extruder and particle size reduction machine operation to relatively precisely control the size, amount and/or ratio of more finely sized particles produced from extruded pellets and other particle entering the particle size reduction machine having a length and/or width at least as great as and preferably greater than the particle size reduction setting. Increasing the particle size reduction setting by increasing the size of the gap between the rolls of the machine correspondingly and preferably proportionally increases the size of the fines produced while at the same time correspondingly and preferably decreasing the amount of fines produced during particle size reduction machine operation. Conversely, decreasing the particle size reduction setting by decreasing the size of the gap between the rolls of the machine correspondingly and preferably proportionally decreases the size of the fines produced while at the same time correspondingly and preferably increasing the amount of fines produced during particle size reduction machine operation.

In this manner, the particle size reduction setting of such a particle size reduction machine can be and preferably is set relative to the largest size of pellets being extruded by each extruder feeding the particle size reduction machine in order to increase or decrease the amount of fines produced from the extruded pellets. In this manner, the particle size reduction setting of such a particle size reduction machine inline with the discharge end of one or more extruders feeding extruded pellets to the particle size reduction machine can be and preferably is selectively varied to correspondingly increase (by decreasing the spacing or gap in changing the particle size reduction setting) the ratio or total amount of fines in the final granular absorbent product or correspondingly decrease (by increasing the spacing or gap in changing the particle size reduction setting) the ratio or total amount of fines in the final granular absorbent product to achieve a desired ratio or ratio range of fines in the final granular absorbent product. In a preferred method, system and particle size reduction machine, the fines ratio of the final granular absorbent product being produced during extruder and inline particle size reduction machine operation is monitored in real time and (a) the spacing or gap between the rolls is automatically adjusted to increase the spacing or gap to particle size reduce fewer pellets and hence produce fewer fines where less fines are needed to achieve the desired minimum fines ratio in the final granular absorbent product, and/or (b) the spacing or gap between the rolls is automatically adjusted to decrease the spacing or gap to particle size reduce more pellets and hence produce more fines where more fines are needed to achieve the desired minimum fines ratio in the final granular absorbent product.

In a preferred method, system and particle size reduction machine embodiment and configuration, the particle size reduction setting is set and/or varied in order to produce enough fines having a particle size no larger than 1.41 mm (14 US sieve) (and having a particle size between 1.41 mm (14 US sieve) and 0.25 mm (60 US sieve) or between 1.41 mm (14 US sieve) and 0.18 mm (80 US sieve)) during particle size reduction of extruded pellets of a size larger than the particle size reduction setting in order for the resultant final granular absorbent product, e.g., final granular absorbent blend or final granular absorbent mixture ready for packaging, shipment and sale, to contain at least 10% fines by total weight of the final granular absorbent product and no more than 50% fines by total weight of the final granular absorbent product. In one such preferred method, system and particle size reduction machine embodiment and configuration, the particle size reduction setting is set and/or varied in order to control the size of the gap or spacing between the rolls to produce enough fines having a particle size no larger than 1.41 mm (14 US sieve) (and having a particle size between 1.41 mm (14 US sieve) and 0.25 mm (60 US sieve) or between 1.41 mm (14 US sieve) and 0.18 mm (80 US sieve)) during particle size reduction of extruded pellets of a size (largest extent of pellet) larger than the gap size or roll spacing in order for the resultant final granular absorbent product, e.g., final granular absorbent blend or final granular absorbent mixture ready for packaging, shipment and sale, to contain at least 15% fines by total weight of the final granular absorbent product and no more than 40% fines by total weight of the final granular absorbent product. Where the final granular absorbent blend product is litter or intended for use as animal, pet or cat litter, such a preferred method, system and particle size reduction machine embodiment is operated in a manner where the size of the gap or spacing between rolls is set and preferably varied in real time during extruder operation to produce self-clumping cat litter in accordance with the present invention preferably having at least 15% fines by total weight of the final self-clumping litter product in order to prevent vertically extending clumps ("stalactite clumps") from forming in the litter box during urination by a cat during litter use and preferably having no more than 40% fines by total weight of the final litter product in order to prevent urine from pooling on top of the surface of litter in the litter box during cat urination during litter use.

In another such preferred method, system and particle size reduction machine embodiment and configuration, the particle size reduction setting is set and/or varied in order to control the size of the gap or spacing between the rolls to produce enough fines having a particle size no larger than 1.41 mm (14 US sieve) (and having a particle size between 1.41 (14 US sieve) and 0.25 mm (60 US sieve) or between 1.41 mm (14 US sieve) and 0.18 mm (80 US sieve)) during particle size reduction of extruded pellets of a size (largest extent of pellet) larger than the gap size or roll spacing in order for the resultant final granular absorbent product, e.g., final granular absorbent blend or final granular absorbent mixture ready for packaging, shipment and sale, to contain at least 20% fines by total weight of the final granular absorbent product and no more than 40% fines by total weight of the final granular absorbent product. Where the final granular absorbent blend product is litter or intended for use as animal, pet or cat litter, such a preferred method, system and particle size reduction machine embodiment is operated in a manner where the size of the gap or spacing between rolls is set and preferably varied in real time during extruder operation to produce self-clumping cat litter in accordance with the present invention preferably having a sufficient amount of fines in excess of the minimum 15% fines by total weight of the final self-clumping litter product needed for proper generally horizontal litter clumping, preferably having at least 20% fines (i.e. contain at least 5% excess fines), in order to prevent vertically extending clumps ("stalactite clumps") of urine wetted pellets, particles and fines from forming in the litter box during urination by a cat during litter use and to ensure any clumps of such urine wetted pellets, particles and fines properly form in the litter box during cat urination on top of the litter box and extend generally horizontally on top of the litter in the litter box. Controlling the particle size reduction setting, i.e., gap size or roll spacing, in order to ensure at least 5% excess fines are produced helps ensure there will be at least 15% fines by total litter product in the litter box when at least half of the litter in the litter box has been spent or used because fines are spent or used more rapidly in a greater amount than the extruded pellets and other larger size particles in the litter box having a size larger than the fines (preferably having a size larger than 1.41 mm (14 US sieve) and preferably no greater than 2.83 mm (7 US sieve) or 2.38 mm (8 US sieve)).

In still another such preferred method, system and particle size reduction machine embodiment and configuration, the particle size reduction setting is set and/or varied in order to control the size of the gap or spacing between the rolls to produce enough fines having a particle size no larger than 1.41 mm (14 US sieve) (and having a particle size between 1.41 mm (14 US sieve) and 0.25 mm (60 US sieve) or between 1.41 mm (14 US sieve) and 0.18 mm (80 US sieve)) during particle size reduction of extruded pellets of a size (largest extent of pellet) larger than the gap size or roll spacing in order for the resultant final granular absorbent product, e.g., final granular absorbent blend or final granular absorbent mixture ready for packaging, shipment and sale, to contain at least 25% fines by total weight of the final granular absorbent product and no more than 45% fines by total weight of the final granular absorbent product. Where the final granular absorbent blend product is litter or intended for use as animal, pet or cat litter, such a preferred method, system and particle size reduction machine embodiment is operated in a manner where the size of the gap or spacing between rolls is set and preferably varied in real time during extruder operation to produce self-clumping cat litter in accordance with the present invention preferably having a sufficient amount of fines in excess of the minimum 15% fines by total weight of the final self-clumping litter product needed for proper horizontal clumping, preferably having at least 25% fines (i.e. contain at least 10% excess fines), in order to prevent vertically extending clumps ("stalactite clumps") of urine wetted pellets, particles and fines from forming in the litter box during urination by a cat during litter use and to ensure any clumps of such urine wetted pellets, particles and fines properly form in the litter box during cat urination on top of the litter box and extend generally horizontally on top of the litter in the litter box. Controlling the particle size reduction setting, i.e., gap size or roll spacing, in order to ensure at least 10% excess fines are produced helps ensure there will be at least 15% fines by total litter product in the litter box when at least half of the litter in the litter box has been spent or used because fines are spent or used more rapidly in a greater amount than the extruded pellets and other larger size particles in the litter box having a size larger than the fines (preferably having a size larger than 1.41 mm (14 US sieve) and preferably no greater than 2.38 mm (8 US sieve)).

It is contemplated that a particle size reduction machine constructed and configured in accordance with the present invention is included in the extruded granular absorbent making and processing system and line shown and described in U.S. Patent Application Publication No. 20150145164. Such a method, system and particle size reduction machine of the present invention also facilitates cold post-extrusion processing of pellets extruded by one or more extruders that are processed in the manner shown and described in U.S. Patent Application Publication No. 20150145164 including during pneumatic conveyor transport. In a preferred extruded granular absorbent processing line, a particle size reduction machine constructed and configured in accordance with the present invention is disposed in line with the pneumatic conveyor, preferably located at the end of the conveyer, such that pellets extruded from each extruder feeding into the conveyor are ultimately transported to the particle size reduction machine for cold particle reduction processing of extruded pellets and other particles delivered thereto that have a size greater than the gap size or roll spacing particle size reduction setting. The rest of the pellets, other particles, and fines created during and after extrusion of a size smaller than the gap size or roll spacing particle size reduction setting preferably pass through the gap or spacing between the rotating rollers of the particle size reduction machine without being particle size reduced. After passing through the particle size reduction machine, the pellets, reduced size particles, other smaller sized particles, and fines preferably form a final granular absorbent mixture or blend product containing a suitably acceptable ratio or minimum product percentage of fines that is ready for packaging, shipment, sale and end use.

Figure 3 illustrates extruded starch-containing pellets that are too large rejects in that each has a lengthwise extent or widthwise extent larger than a minimum acceptable size, in the present case larger in size than 2.38 mm (8 US sieve), to be suitable for use in the final granular absorbent product - in this case each being too large for litter use. Figure 4 illustrates carrying at a reject recovery step of a preferring implementation of such a particle size reduction method, system and machine of the present invention that not only reduces the size of such too large extruded pellet rejects to a smaller size small enough to be acceptable for final product use, in this case small enough to now be suitable for litter use, but which also forms one or more fines from one or more of the too large extruded pellet rejects during their particle size reduction. Where such a particle size reduction method, system and machine is configured for or otherwise used to carry out such a reject recovery step, extruded pellets of a size larger than reject size, in this case larger than 2.38 mm (8 US sieve), are particle size reduced into smaller sized particles each having a size less than reject size, in this case smaller than 2.38 mm (8 US sieve), making each smaller sized particle suitable for use in the final granular absorbent product - in this case making them suitable for litter use.

It is an advantage of the method, system and particle size reduction machine of the present invention in that putting the particle size reduction inline with one or more, preferably at least a plurality, and more preferably at least a plurality of pairs, of extruders enables the step of screening for too large size pellet rejects having a size greater than a predetermined reject size, preferably larger than 2.83 mm (7 US sieve) or more preferably larger than 2.38 mm (8 US sieve), previously done to be eliminated because all extruded pellets which ordinarily would be too large to be suitable for use are automatically reduced in size into particles having a size smaller than reject size, in this case smaller than 2.83 mm (7 US sieve) and preferably smaller than 2.38 mm (8 US sieve). With continued reference to Figure 4, in order to ensure that all extruded pellets which would have been previously too large to be suitable for use by being larger than reject size are particle size reduced in accordance with the present method, system and particle size reduction machine in accordance with the present invention to be small enough to be suitable for use.

Figure 4 shows the too large extruded pellet rejects after particle size reduction that not only reduces the size of every rejected pellet into smaller sized particles each having a smaller size suitable for use but which also produces at least a plurality of pairs of fines each smaller in size than each one of the suitably sized smaller sized particles. Figure 4 shows the rejected pellets after being particle size reduced through a roll type particle size reduction machine having an 1.19 mm (0.047-inch) gap size or roll spacing particle size reduction setting reducing the size of substantially all of the rejected pellets and producing some fines. Figure 5 shows the rejected pellets after being particle size reduced through a roll type particle size reduction machine having an 0.76 mm (0.030-inch) gap size or roll spacing particle size reduction setting reducing the size of substantially all of the rejected pellets and producing more fines than in Figure 4 due to the smaller gap or roll spacing used as the particle size reduction setting.

Figure 6 shows a first batch of extruded pellets and smaller more finely sized "fines" produced from or during extrusion and/or during transport immediately after extrusion but before performing non-compression induced particle size reduction in accordance with the present invention. Figure 7 depicts as-extruded pellets and smaller more finely sized "fines" from the first batch of Figure 6 after performing non-compression induced particle size reduction with a non-compression induced particle size reduction machine having a 1.57 mm (0.062-inch) particle size reduction setting. Figure 8 depicts as-extruded pellets and smaller more finely sized "fines" from the first batch of Figure 6 after performing non-compression induced particle size reduction with a non-compression induced particle size reduction machine having a smaller 1.37 mm (0.054-inch) particle size reduction setting increasing the amount and ratio of fines produced as a result. Figure 9 depicts as-extruded pellets and smaller more finely sized "fines" from the first batch of Figure 6 after performing non-compression induced particle size reduction with a non-compression induced particle size reduction machine having an even smaller 1.24 mm (0.049-inch) particle size reduction setting further increasing the amount and ratio of fines produced as a result of decreasing the gap size or spacing between the rolls. Figure 10 depicts as-extruded pellets and smaller more finely sized "fines" from the first batch of Figure 6 after performing non-compression induced particle size reduction with a non-compression induced particle size reduction machine having an even smaller 1.14 mm (0.045-inch) particle size reduction setting even further increasing the ratio of fines produced as a result. Figure 11 depicts as-extruded pellets and smaller more finely sized "fines" from the first batch of Figure 6 after performing non-compression induced particle size reduction with a non-compression induced particle size reduction machine having a 1 mm (0.039-inch) particle size reduction setting increasing the amount and total ratio of fines produced as a result even more than that depicted in Figure 10.

Figure 12 shows an enlarged second batch of as-extruded pellets and smaller more finely sized "fines" produced from or during extrusion and/or during transport immediately after extrusion but before performing non-compression induced particle size reduction in accordance with the present invention. Figure 13 depicts an increase in the amount and ratio of fines produced after performing non-compression induced particle size reduction in accordance with the present invention using a non-compression induced particle size reduction machine having a 0.76 mm (0.030-inch) particle size reduction setting on all of the as-extruded pellets and smaller more finely sized "fines" of the second batch of Figure 12.

Figure 14 depicts an enlarged portion of a third batch of as-extruded pellets and smaller more finely sized "fines" produced from or during extrusion and/or during transport immediately after extrusion but before performing non-compression induced particle size reduction in accordance with the present invention. Figure 15 is a second microscope photo enlarged to show the third batch after all of the as-extruded pellets and smaller fines of the third batch of Figure 14 have been particle size reduced in accordance with the present invention using non-compression induced particle size reduction with a non-compression induced particle size reduction machine having a 0.76 mm (0.030-inch) particle size reduction setting.

Figure 16 depicts an enlarged portion of a fourth batch of as-extruded pellets and smaller more finely sized "fines" produced from or during extrusion and/or during transport immediately after extrusion but before performing non-compression induced particle size reduction. Figure 17 is a second microscope photo enlarged to show the fourth batch after all of the as-extruded pellets and smaller fines of the fourth batch of Figure 16 have been particle size reduced using non-compression induced particle size reduction in accordance with the present invention with a non-compression induced particle size reduction machine having a 0.76 mm (0.030) particle size reduction setting

Figure 18 is a microscope photo depicting an enlarged portion of a fifth batch of as-extruded pellets and smaller more finely sized "fines" produced from or during extrusion and/or during transport immediately after extrusion but before performing non-compression induced particle size reduction. Figure 19 is a second microscope photo enlarged to show the fifth batch after all of the as-extruded pellets and smaller fines of the fifth batch of Figure 18 have been particle size reduced using non-compression induced particle size reduction in accordance with the present invention with a non-compression induced particle size reduction machine having a 0.76 mm (0.030-inch) particle size reduction setting.

Figure 20 is a microscope photo depicting an enlarged sixth batch of as-extruded pellets and smaller more finely sized "fines" produced from or during extrusion and/or during transport immediately after extrusion but before performing non-compression induced particle size reduction. Figure 21 is a second microscope photo enlarged to show the sixth batch after all of the as-extruded pellets and smaller fines of the sixth batch of Figure 20 have been particle size reduced using non-compression induced particle size reduction in accordance with the present invention with a non-compression induced particle size reduction machine having a 0.76 mm (0.030-inch) particle size reduction setting.

While many attempts have been made in the past to produce granular absorbent through extrusion of starch-containing material for use as litter, virtually none of these attempts have met with any more than limited commercial success. While some of these attempts even appear quite compelling on paper, including one or more where extruded pellet size was reduced including by trying to break pellets into smaller sized particles, virtually all of these failed attempts have been the result of extruding starch-containing pellets that performed so poorly they were unsuitable for consumer or commercial use.

While such previous attempts at particle size reduction have sought to break extruded pellets into smaller sized particles in order to increase absorption and/or help prevent urine from leaching to the bottom of the litter container during use, these attempts also have met with limited, if any, commercial success. This is because most, if not all, of these past attempts have used compression-type deformation induced particle size reduction methods that employ equipment, like hammer mills and other types of equipment that perform size reduction by impacting, smashing, mashing or otherwise engaging extruded pellets undergoing size reduction in a manner that compresses or compacts them during size reduction. While these types of compression deformation-inducing methods and equipment were often employed to seek to break apart the pellets into smaller sized particles by impacting them, smashing them, mashing them, or even pulverizing them during size reduction, they many times instead simply compress, compact, crush or mash the pellet without breaking it up so its size is reduced because it occupies a smaller volume. Even where pellets are broken apart into two or more smaller sized particles, impacting them, crushing them, smashing them, mashing them, or even pulverizing them deforms one or more regions of each reduced size particle that results in a manner that compacts or compresses each region to a depth sufficient to adversely impact its performance, functionality and/or shelf-life.

Just as bad, if not worse, is that compression-inducing or pellet-compacting particle size reduction equipment frequently reduces the size of the extruded pellet without any breakup of the pellet occurring. In such instances, which are quite common when using compression-inducing or pellet-compacting particle size reduction equipment, particle size reduction is achieved solely through compression or compaction of the extruded pellet. In other words, when this happens, the extruded pellet is not broken up into smaller sized particles but rather the pellet is simply compressed or compacted into a smaller size during particle size reduction.

Achieving size reduction through hammering or smashing starch-containing extruded pellets into smaller sized particles using such pellet compressing or compacting equipment virtually always increases the bulk density of the resultant or final granular absorbent product made with the reduced-size particles. While one component of the bulk-density increase attributable to the increase in volume actually filled or occupied by granular absorbent due to newly-created smaller sized particles filling previously unfilled voids and gaps between larger sized particles is known and often times desired, there is a believed to be heretofore unknown or unappreciated densification component resulting from the reduced-size particles being compressed or compacted during their creation. compression or mashing of the reduced-size particles during their creation.

It has been discovered that performing particle-size reduction using such prior art compression deformation based and/or pellet compacting methods and equipment undesirably densifies one or more regions of each extruded pellet during such size reduction and/or each reduced size particle produced during such size reduction. It has been further discovered that such densification can not only adversely impact the density of the final granular absorbent product made with the reduced size particles, but that densification also adversely affects performance including be reducing absorption rates and/or absorption capacity.

Absorption performance is adversely impacted from being compressed or compacted during particle size reduction because open pores become closed and/or sealed off and internal voids collapsed during particle size reduction all of which adversely impacts absorption typically by reducing one or both absorption capacity and/or absorption rate. Depending on the amount and/or magnitude of compression or compaction that takes place during particle-size reduction, a starch matrix in each extruded pellet composed of modified starch formed by modifying starch in the starch-containing mixture during gelatinization and/or pellet extrusion can also be adversely affected adversely impacting reduced size particle sorbent performance. In addition, such impact-based and/or compression deformation inducing extruded pellet size reduction methods and types of equipment typically also cause the temperature of each extruded pellet undergoing such size reduction to heat up by at least four or five degrees Celsius which typically further adversely reduces sorbent performance.

What is needed is a method and system in which particle size reduction of absorbent pellets extruded from a starch-containing mixture is performed without adversely impacting the as-extruded starch matrix of each extruded pellet undergoing particle size reduction during particle size reduction. What is needed is a method and system in which particle size reduction of absorbent pellets extruded from a starch-containing mixture is performed without adversely impacting the as-extruded starch matrix of each extruded pellet undergoing particle size reduction during particle size reduction in a manner that reduces or otherwise adversely affects granular absorbent/cat litter performance (including absorption capacity and rate of liquid uptake/absorption). What is also needed is such a method and system in which particle size reduction is performed in a manner that compacts or compresses each extruded pellet less than those using compression-inducing or pellet-compacting size reduction equipment. What preferably is also needed is such a method and system in which particle size reduction is performed in a manner that compacts or compresses each extruded pellet sufficiently less than those using compression-inducing or pellet-compacting size reduction equipment that granular absorbent/cat litter performance is not adversely affected.

What is needed is a method, system and/or equipment in which particle size reduction is performed in a manner that does not compact or compress each extruded pellet undergoing particle size reduction and which preferably does not compact, compress or otherwise densify any region of each extruded pellet undergoing particle size reduction. What also is needed is a method, system and/or equipment where particle size reduction is achieved by inducing tensile or shear deformation in each starch-containing extruded pellet undergoing such size reduction thereby reducing and preferably substantially completely eliminating occurrence of any compressed, compacted and/or otherwise densified regions in any resultant reduced size particle produced.

What is needed is a method and/or system, which preferably also includes equipment, which reduces the size of pellets extruded from starch-containing material without significantly compressing or compacting them during size reduction. What also is needed is a method and/or system, which preferably also includes equipment, which reduces the size of such extruded pellets in a manner that breaks them up into smaller sized particles without adversely impacting their performance. What also is needed is a method and/or system, which preferably also includes equipment, which reduces the size of such extruded pellets in a manner without substantially affecting or otherwise significantly impacting any aspect of any starch matrix previously formed during extrusion in any of the extruded pellets undergoing size reduction.

The present invention is directed to a method and system that preferably also includes equipment that enables particle size reduction of absorbent pellets extruded from a starch-containing mixture to be performed without adversely impacting the as-extruded starch matrix of each extruded pellet undergoing particle size reduction during particle size reduction. The present invention is directed to a method and system that preferably also includes equipment that enables particle size reduction of absorbent pellets extruded from a starch-containing mixture to be performed without adversely impacting the as-extruded starch matrix of each extruded pellet undergoing particle size reduction during particle size reduction in a manner that reduces or otherwise adversely affects granular absorbent/cat litter performance (including in a manner that does not adversely affect absorption capacity and rate of liquid uptake/absorption and which preferably actually improves absorption capacity and rate of liquid uptake/absorption).

The present invention can be directed to such a method and system that preferably also includes equipment where particle size reduction is performed in a manner that compacts or compresses each extruded pellet less than the aforementioned prior art that employs compression-inducing or pellet-compacting methods and size reduction equipment and which preferably does not perform any compacting or compression during size reduction. Where any compaction or compression does occur or might occur, the present invention also is directed to a method and system that preferably also includes equipment where particle size reduction is performed in a manner that compacts or compresses each extruded pellet sufficiently less than in the prior art that use compression-inducing or pellet-compacting size reduction equipment such that granular absorbent/cat litter performance is not adversely affected.

The present invention most preferably is directed to a method, system and/or equipment in which particle size reduction is performed in a manner that does not compact or compress extruded pellets undergoing particle size reduction and which preferably does not compact, compress or otherwise densify any region of any extruded pellet undergoing particle size reduction. The present invention is directed to a method, system and/or equipment where particle size reduction is achieved by inducing tensile or shear deformation in each starch-containing extruded pellet undergoing size reduction thereby reducing and preferably substantially completely eliminating the creation of any compressed, compacted and/or otherwise densified regions in any resultant reduced size particle produced. The present invention preferably is thereby directed to a method and system, including at least some equipment, configured to perform such tensile or shear induced particle size reduction in a manner that breaks apart each extruded pellet undergoing size reduction into two or more smaller sized particles.

The present invention is directed to a method, system and equipment that reduces the size of pellets extruded from starch-containing material using tensile-induced, shear-induced or shear-induced and tensile-induced particle size reduction to reduce particle size using tensile and shear forces applied to each starch-containing pellet undergoing particle size reduction during particle size reduction thereby cutting, tearing and/or shearing each pellet undergoing size reduction into at least a plurality of particles smaller in size than the pellet that underwent particle size reduction. The present invention is directed to a method, system and equipment that reduces the size of extruded pellets by using tensile-induced, shear-induced or shear-induced and tensile-induced particle size reduction to reduce particle size using tensile/tension, torsion and/or shear forces applied to each starch-containing pellet undergoing particle size reduction during particle size reduction forming a plurality of smaller size particles from each pellet undergoing size reduction without significantly compressing or compacting the extruded pellet nor each reduced size particle produced therefrom during size reduction.

Such a preferred method, system and equipment therefore does so in a manner that not only produces more finely sized "fines" from such extruded pellets during such non-compression induced particle size reduction using one or more of tensile/tension force induced particle size reduction, torsion/torsion force induced particle size reduction, and/or shear/shear-force induced particle size reduction but which also enables or otherwise facilitates control of the rate, ratio, amount and/or volume of fines produced as part of a method, system and equipment for producing granular absorbent/cat litter, blends and/or formulations having clump shape, size, depth, clump compression and/or crush strength and/or retention rate within a desired acceptable and/or optimal range. Such a preferred method, system and equipment preferably also does so in a manner that not only produces more finely sized "fines" from such extruded pellets during such non-compression induced particle size reduction using one or more of tensile/tension force induced particle size reduction, torsion/torsion force induced particle size reduction, and/or shear/shear-force induced particle size reduction but preferably does so dynamically in real time during operation of one or more extruders extruding pellets that shortly thereafter, preferably substantially thereafter, undergo such non-compression induced particle size reduction.

One or more method(s), system(s) and/or equipment for carrying out the present invention are well suited for use with one or more of the granular absorbent methods, embodiments, formulations, and/or blends disclosed in one or more of U.S. Application Serial Nos. 13/842534, 13/868073, 13/868084, 14/426483, 14/605045, 14/656086, 14/656692, and/or 14/668975, respectively published as U.S. Patent Application Publication Nos. US20140069344, US20140069345, US20140069346, US20150238931, US20150145164, US20150181832, US20150181834, and/or US20150196005, which each share common inventorship and ownership with the present application, in reducing the size of pellets extruded in accordance therewith including to produce more smaller more finely sized particles or "fines" to not only improve granular absorbent performance, provide granular absorbent density control, and/or provide clump size, shape, and/or depth control (particularly where used as cat litter), but also to turn oversized rejected pellets and/or sorbent particles into acceptably smaller sized particles suitable for granular absorbent/litter use. It should be noted that the granular absorbent methods, embodiments, formulations, and/or blends disclosed in U.S. Application Serial Nos. 13/842534, 13/868073, 13/868084, 14/426483, 14/605045, 14/656086, 14/656692, and 14/668975, respectively published as U.S. Patent Application Publication Nos. US20140069344, US20140069345, US20140069346, US20150238931, US20150145164, US20150181832, US20150181834, and US20150196005 are well suited for use as litter, e.g., animal litter, pet litter, and/or cat litter, including self-clumping cat litter.

The present invention is directed to a method and system that preferably also includes equipment for processing extruded granular absorbent after extrusion of the granular absorbent in a manner that not only provides non-compression induced particle size reduction of extruded absorbent pellets and other particles of extruded granular absorbent, but which also does so in a manner that is capable of providing control over (a) the size(s) and/or range of size(s) of reduced-size particles produced, (b) the amount of reduced-size particles produced, and/or (c) the ratio of reduced-size particles in the final granular absorbent product that gets packaged for sale and/or sold. The present invention is directed to a preferred method and system for doing so in a manner that performs substantially continuous non-compression induced particle size reduction control in real time during extrusion of absorbent pellets from at least one and preferably at least a plurality of extruders, including substantially simultaneously during extrusion of absorbent pellets from each extruder whose extruded pellets are undergoing particle size reduction.

In a particularly preferred particle size reduction method and system, particle size reduction processing of extruded pellets and/or other extruded granular absorbent particles is carried out in a cold-processing particle size reduction method, system and/or step of the present invention where the temperature of extruded pellets and any other extruded granular absorbent particles undergoing particle size reduction rises no more than two degrees Celsius during particle size reduction, preferably rises no more than one degree Celsius during particle size reduction, and more preferably rises no more than one-half of a degree Celsius during particle size reduction. Where the method and system is or includes such cold-processing particle size reduction, non-compression induced cold-processed particle size reduction is performed such that the temperature of any extruded pellets and/or other extruded granular absorbent particles rises no more than two degrees Celsius during particle size reduction, preferably rises no more than one degree Celsius during particle size reduction, and more preferably rises no more than one-half of a degree Celsius during particle size reduction.

The method(s) and system(s) of the present invention, including any equipment for performing non-compression induced pellet and other extruded granular absorbent particle size reduction is well suited for use with and/or in making (a) water-absorbing granular absorbent (and finished/final water-absorbing granular absorbent product), (b) oil-absorbing granular absorbent (and finished/final oil-absorbent granular absorbent product), (c) granular absorbent well suited for use in oil-absorbing and water-absorbing applications including in its finished/final oil and water absorbing granular absorbent finished product, and/or (d) animal, pet and/or cat litter including finished/final litter product composed of such non-compression induced particle size reduced pellets.

## Claims

1. A system for post-extrusion processing of extruded granular absorbent comprising:
an extruder (22) for extruding pellets of granular absorbent;
a granular absorbent cooling and drying subsystem (34) for cooling and drying the pellets after extrusion without raising the temperature of the extruded pellets; and
a granular absorbent processing subsystem (36) for processing the pellets after extrusion, cooling and drying of the pellets (28a) has been performed, the granular absorbent processing subsystem (36) comprised of a rotating roll type pellet comminuting mill (65) that reduces the size of the cooled and dried extruded pellets (28a) to form processed extruded pellets (28a),
**characterized in that**
the rotating roll type pellet comminuting mill (65) having a pair of generally horizontal side-by-side elongate pellet comminuting corrugated rolls (80, 82) which are generally parallel to one another and rotate toward one another wherein a spacing of a gap between the rolls (80, 82) and a differential in rotational speeds of the counter-rotating rolls (80, 82) determines a maximum pellet size to which the extruded pellets (28a) are particle size reduced thereby.

2. The system of claim 1 wherein the rotating roll type pellet comminuting mill (65) is one of a roll granulator and granulating mill (84) having corrugated rolls (80, 82) with a gap therebetween whose spacing is selectively variable controlling at least one of (a) a size of more finely sized particles and (b) an amount of more finely sized particles produced during particle size reduction of a plurality of pairs of extruded pellets (28a) extruded by at least one extruder (22).

3. The system of claim 1 wherein the rolls (80, 82) have a gap therebetween whose spacing is selectively variable controlling at least one of (a) a size of more finely sized particles and (b) an amount of more finely sized particles simultaneously produced during particle size reduction of a plurality of pairs of extruded pellets (28a) extruded simultaneously by each one of at least a plurality of extruders (22).

4. The system of claim 1 wherein the rolls (80, 82) have a gap therebetween whose spacing is selectively variable controlling at least one of (a) a size of more finely sized particles and (b) an amount of more finely sized particles simultaneously produced during particle size reduction of a plurality of pairs of extruded pellets (28a) extruded simultaneously by each one of at least a plurality of pairs of extruders (22).

5. The system of claim 1, wherein the rotating roll type pellet comminuting mill (65) is a roll granulator or granulating mill (84) equipped with first and second generally horizontal side-by-side elongate pellet-comminuting corrugated rolls (80, 82), the first roll (80) being longitudinally corrugated and the second roll (82) being circumferentially corrugated.

6. A method for post-extrusion processing of extruded granular absorbent comprising:
(a) providing an extruder (22) that extrudes pellets (28a) of granular absorbent from a starch-containing admixture, a cold-processing arrangement (32) configured to at least one of cool and dry the pellets (28a) after extrusion, and a granular absorbent processing subsystem (36) according to claim 1 and configured to process the extruded pellets (28a) after cooling and drying in a manner that changes at least one parameter or characteristic of the pellets (28a);
(b) applying pressure and temperature to a starch-containing admixture in the extruder (22) to gelatinize at least some of the starch in the admixture and extruding the gelatinized starch containing admixture from the extruder (22) as granular absorbent pellets (28a);
(c) cold-processing of the pellets (28a) after extrusion by at least one of cooling and drying of the pellets (28a) upon extrusion of the pellets (28a) from the extruder (22) at a granular absorbent cooling and drying subsystem (34); and
(d) thereafter processing the extruded pellets (28a) in a manner that changes at least one parameter or characteristic of the pellets at the provided granular absorbent processing subsystem (36) to form processed extruded pellets (28a), wherein the processed extruded pellets (28a) have a maximum particle size of 1.41 mm (14 US sieve).

7. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and which have a gap between the rolls (80, 82), and wherein the roll granulator or granulating mill (84) reduces the size of the cooled and dried extruded pellets (28a) without compression or compaction of the extruded pellets (28a) whose size is reduced by or during particle size reduction.

8. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and which have a gap between the rolls (80, 82), and wherein the rolls (80, 82) cuts each one of the extruded pellets (28a) whose particle size is reduced in reducing pellet size.

9. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and which have a gap between the rolls (80, 82), and wherein the rolls (80, 82) shears each one of the extruded pellets (28a) whose particle size is reduced in reducing pellet size.

10. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and which have a gap between the rolls (80, 82), and wherein the rolls (80, 82) tears each one of the extruded pellets (28a) whose particle size is reduced in reducing pellet size.

11. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and which have a gap between the rolls (80, 82), and wherein the rolls (80, 82) pulls apart each one of the extruded pellets (28a) whose particle size is reduced in reducing pellet size.

12. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and have a gap between the rolls (80, 82), and wherein the roll granulator or granulating mill (84) twists apart each one of the extruded pellets (28a) whose particle size is reduced in reducing pellet size.

13. The method of claim 6, wherein the granular absorbent processing subsystem (36) has a pellet processing machine configured to reduce pellet size, and wherein the temperature of the pellets (28a) whose size is reduced by the processing machine is not increased while engaging the processing machine.

14. The method of claim 6, wherein the granular absorbent processing subsystem (36) has a pellet processing machine configured to reduce pellet size that forms from or of each extruded pellet (28a) whose sized is reduced by the processing machine at least one (a) smaller sized particle having a size smaller than the extruded pellet (28a) and a maximum particle size of 1.41 mm (14 US sieve), and (b) at least one more finely sized particle having a size less than 1.41 mm (14 US sieve).

15. The method of claim 6, wherein the granular absorbent processing subsystem (36) has a pellet processing machine configured to reduce pellet size, and wherein a plurality of the reduced size processed extruded pellets (28a) have a density that is not larger than a density of the pellets (28a) extruded by the extruder (22).

16. The method of claim 6, wherein the granular absorbent processing subsystem (36) has a pellet processing machine configured to reduce pellet size, and wherein each reduced size processed extruded pellet (28a) has a density that is not larger than a density of the pellets (28a) extruded by the extruder (22).

17. The method of claim 6, wherein the granular absorbent processing subsystem (36) has a pellet processing machine configured to reduce pellet size, and wherein each reduced size processed extruded pellet (28a) has a density that is less than a density of the pellets (28a) extruded by the extruder (22).

18. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and which have a gap between the rolls (80, 82), and wherein the gap between the rolls (80, 82) is selectively varied during extruder operation to vary an amount of fines produced by or during particle size reduction in relation to an amount of at least one of (a) smaller sized particles smaller than the extruded pellet (28a) from which they were formed during particle size reduction but larger than the fines produced during particle size reduction, and/or (b) extruded pellets (28a) whose size was not reduced by or during particle size reduction.

19. The method of claim 6, wherein the granular absorbent processing subsystem (36) has a roll granulator or granulating mill (84) having a pair of generally horizontal side-by-side elongate corrugated rolls (80, 82) which are generally parallel to one another, rotate toward each another, and which have a gap between the rolls (80, 82), and wherein the gap between the rolls (80, 82) is dynamically selectively varied during extruder operation to dynamically vary an amount of fines produced by or during particle size reduction in relation to an amount of at least one of (a) smaller sized particles smaller than the extruded pellet (28a) from which they were formed during particle size reduction but larger than the fines produced during particle size reduction, or (b) extruded pellets (28a) whose size was not reduced by or during particle size reduction to maintain one of a ratio and weight percent range of fines to at least one of (a) or (b) greater than a desired minimum or within a desired weight percent range.

20. The method of claim 6, wherein the granular absorbent processing subsystem (36) has a roll granulator or granulating mill (84) having a pair of generally horizontal side-by-side elongate pellet (28a) comminuting rolls (80, 82) which are generally parallel to one another, rotate toward each another, and which have a gap between the rolls (80, 82), and wherein the gap between the rolls (80, 82) is dynamically selectively varied during extruder operation to dynamically vary an amount of fines produced by or during particle size reduction in relation to a total amount of (a) smaller sized particles smaller than the extruded pellet (28a) from which they were formed during particle size reduction but larger than the fines produced during particle size reduction, and (b) extruded pellets (28a) whose size was not reduced by or during particle size reduction to maintain one of a ratio and weight percent range of fines to (a) and (b) that is greater than a desired minimum or which lies within a desired weight percent range.

## Patentansprüche

1. System zur Nach-Extrusions-Verarbeitung von extrudiertem granularem Absorptionsmittel, umfassend:
einen Extruder (22) zum Extrudieren von Pellets aus granularem Absorptionsmittel,
ein Kühlungs- und -Trocknungs-Teilsystem (34) für granulares Absorptionsmittel, zum Kühlen und Trocknen der Pellets nach dem Extrudieren, ohne die Temperatur der extrudierten Pellets zu erhöhen; und
ein Verarbeitungs-Teilsystem (36) für granulares Absorptionsmittel, zum Verarbeiten der Pellets nach dem Extrudieren, Kühlen und Trocknen der Pellets (28a), wobei das Verarbeitungs-Teilsystem (36) für granulares Absorptionsmittel eine Pellet-Zerkleinerungsmühle (65) vom Typ mit rotierenden Walzen umfasst, welche die Größe der gekühlten und getrockneten extrudierten Pellets (28a) reduziert, um verarbeitete extrudierte Pellets (28a) zu bilden,
**dadurch gekennzeichnet, dass** die Pellet-Zerkleinerungsmühle (65) vom Typ mit rotierenden Walzen ein Paar von im Allgemeinen horizontalen, nebeneinander angeordneten, länglichen, gewellten Pellet-Zerkleinerungswalzen (80, 82) aufweist, welche im Allgemeinen parallel zueinander sind und sich aufeinander zu drehen, wobei ein Abstand eines Spalts zwischen den Walzen (80, 82) und ein Unterschied in den Drehgeschwindigkeiten der sich gegenläufig drehenden Walzen (80, 82) eine maximale Pelletgröße bestimmt, auf welche die extrudierten Pellets (28a) durch zerkleinert werden.

2. System nach Anspruch 1, wobei die Pellet-Zerkleinerungsmühle (65) vom Typ mit rotierenden Walzen eine Walzengranulator oder eine Granuliermühle (84) ist, die gewellte Walzen (80, 82) mit einem Spalt dazwischen aufweist, dessen Abstand selektiv variabel ist und (a) eine Größe feinerer Partikel und/oder (b) eine Menge feinerer Partikel steuert, welche während der Partikelgrößenreduzierung einer Vielzahl von Paaren extrudierter Pellets (28a) erzeugt werden, die durch mindestens einen Extruder (22) extrudiert werden.

3. System nach Anspruch 1, wobei die Walzen (80, 82) einen Spalt zwischeneinander aufweisen, dessen Abstand selektiv variabel ist und (a) eine Größe feinerer Partikel und/oder (b) eine Menge feinerer Partikel steuert, welche gleichzeitig während der Partikelgrößenreduzierung einer Vielzahl von Paaren extrudierter Pellets (28a) erzeugt werden, die gleichzeitig durch jeden von mindestens einer Vielzahl von Extrudern (22) extrudiert werden.

4. System nach Anspruch 1, wobei die Walzen (80, 82) einen Spalt zwischeneinander aufweisen, dessen Abstand selektiv variabel ist und (a) eine Größe feinerer Partikel und/oder (b) eine Menge feinerer Partikel steuert, welche gleichzeitig während der Partikelgrößenreduzierung einer Vielzahl von Paaren extrudierter Pellets (28a) erzeugt werden, die gleichzeitig von jedem einzelnen von mindestens einer Vielzahl von Paaren von Extrudern (22) extrudiert werden.

5. System nach Anspruch 1, wobei die Pellet-Zerkleinerungsmühle (65) vom Typ mit rotierenden Walzen ein Walzengranulator oder eine Granuliermühle (84) ist, die mit einer ersten und einer zweiten im Allgemeinen horizontalen, nebeneinander angeordneten, länglichen, gewellten Walze (80, 82) zur Zerkleinerung von Pellets ausgestattet ist, wobei die erste Walze (80) in Längsrichtung gewellt ist und die zweite Walze (82) in Umfangsrichtung gewellt ist.

6. Verfahren zur Nach-Extrusions-Verarbeitung eines extrudierten granularen Absorptionsmittels, umfassend:
(a) Bereitstellen eines Extruders (22), welcher Pellets (28a) aus einem granularen Absorptionsmittel aus einem stärkehaltigen Gemisch extrudiert, einer Kaltverarbeitungsanordnung (32), welche so konfiguriert ist, dass sie die Pellets (28a) nach der Extrusion kühlt und/oder trocknet, und eines Teilsystems (36) zur Verarbeitung des granularen Absorptionsmittels nach Anspruch 1, welches so konfiguriert ist, dass es die extrudierten Pellets (28a) nach dem Kühlen und Trocknen in einer Weise verarbeitet, die mindestens einen Parameter oder eine Eigenschaft der Pellets (28a) ändert;
(b) Beaufschlagen von Druck und Temperatur auf ein stärkehaltiges Gemisch in dem Extruder (22), um mindestens einen Teil der Stärke in dem Gemisch zu gelatinieren, und Extrudieren des gelatinierten, stärkehaltigen Gemisches aus dem Extruder (22) als granulare Absorptionsmittel-Pellets (28a);
(c) Kaltverarbeitung der Pellets (28a) nach der Extrusion durch Kühlen und/oder Trocknen der Pellets (28a) nach der Extrusion der Pellets (28a) aus dem Extruder (22) in einem Kühlungs- und Trocknungs-Teilsystem (34) für granulares Absorptionsmittel, und
(d) anschließendes Verarbeiten der extrudierten Pellets (28a) in einer Weise, welche mindestens einen Parameter oder eine Eigenschaft der Pellets in dem bereitgestellten Verarbeitungs-Teilsystem (36) für granulares Absorptionsmittel ändert, um verarbeitete extrudierte Pellets (28a) zu bilden, wobei die verarbeiteten extrudierten Pellets (28a) eine maximale Partikelgröße von 1,41 mm (14 US-Sieb) aufweisen.

7. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen, gewellten Walzen (80, 82) aufweist, die im Allgemeinen parallel zueinander sind, sich zueinander drehen und die einen Spalt zwischen den Walzen (80, 82) aufweisen, und wobei der Walzengranulator oder die Granuliermühle (84) die Größe der gekühlten und getrockneten extrudierten Pellets (28a) ohne Kompression oder Verdichtung der extrudierten Pellets (28a), deren Größe durch die oder während der Partikelgrößenreduzierung verringert wird, reduziert.

8. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen, gewellten Walzen (80, 82) aufweist, die im Allgemeinen parallel zueinander angeordnet sind, sich zueinander drehen und einen Spalt zwischen den Walzen (80, 82) aufweisen, und wobei die Walzen (80, 82) jedes der extrudierten Pellets (28a) schneiden, deren Partikelgröße bei der Reduzierung der Pelletgröße verringert wird.

9. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen, gewellten Walzen (80, 82) aufweist, die im Allgemeinen parallel zueinander angeordnet sind, sich aufeinander zu drehen und einen Spalt zwischen den Walzen (80, 82) aufweisen, und wobei die Walzen (80, 82) jedes der extrudierten Pellets (28a) scheren, deren Partikelgröße bei der Reduzierung der Pelletgröße verringert wird.

10. Verfahren nach Anspruch 6, wobei das Verarbeitungs-Teilsystem (36) für granulares Absorptionsmittel einen Walzengranulator oder eine Granuliermühle (84) mit einem Paar im Allgemeinen horizontaler, nebeneinander angeordneter, länglicher, gewellter Walzen (80, 82) aufweist, die im Allgemeinen parallel zueinander angeordnet sind, sich aufeinander zu drehen und einen Spalt zwischen den Walzen (80, 82) aufweisen, und wobei die Walzen (80, 82) jedes der extrudierten Pellets (28a) zerreißen, deren Partikelgröße bei der Reduzierung der Pelletgröße verringert wird.

11. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen, gewellten Walzen (80, 82) aufweist, die im Allgemeinen parallel zueinander angeordnet sind, sich aufeinander zu drehen und einen Spalt zwischen den Walzen (80, 82) aufweisen, und wobei die Walzen (80, 82) jedes der extrudierten Pellets (28a) auseinanderziehen, deren Pelletgröße bei der Reduzierung der Pelletgröße verringert wird.

12. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen, gewellten Walzen (80, 82) aufweist, die im Allgemeinen parallel zueinander sind, sich zueinander drehen und einen Spalt zwischen den Walzen (80, 82) aufweisen, und wobei der Walzengranulator oder die Granuliermühle (84) jedes der extrudierten Pellets (28a) auseinanderdreht, deren Pelletgröße bei der Reduzierung der Pelletgröße verringert wird.

13. Verfahren nach Anspruch 6, wobei das Verarbeitungs-Teilsystem (36) für granulares Absorptionsmittel eine Pellet-Verarbeitungsmaschine aufweist, welche so konfiguriert ist, dass sie die Pelletgröße reduziert, und wobei die Temperatur der Pellets (28a), deren Größe durch die Verarbeitungsmaschine reduziert wird, nicht erhöht wird, während die Verarbeitungsmaschine in Betrieb ist.

14. Verfahren nach Anspruch 6, wobei das Verarbeitungs-Teilsystem (36) für granulares Absorptionsmittel eine Pellet-Verarbeitungsmaschine aufweist, welche so konfiguriert ist, dass sie die Pelletgröße reduziert und aus jedem extrudierten Pellet (28a), dessen Größe durch die Verarbeitungsmaschine reduziert wird, mindestens einen (a) kleineren Partikel mit einer Größe kleiner als das extrudierte Pellet (28a) und einer maximalen Partikelgröße von 1,41 mm (14 US-Sieb), und (b) mindestens einen feineren Partikel mit einer Größe von weniger als 1,41 mm (14 US-Sieb) bildet.

15. Verfahren nach Anspruch 6, wobei das Verarbeitungs-Teilsystem (36) für granulares Absorptionsmittel eine Pellet-Verarbeitungsmaschine aufweist, welche so konfiguriert ist, dass sie die Pelletgröße reduziert, und wobei eine Vielzahl der verarbeiteten extrudierten Pellets (28a) mit reduzierter Größe eine Dichte aufweist, die nicht größer ist als die Dichte der durch den Extruder (22) extrudierten Pellets (28a).

16. Verfahren nach Anspruch 6, wobei das Verarbeitungs-Teilsystem (36) für granulares Absorptionsmittel eine Pellet-Verarbeitungsmaschine aufweist, welche so konfiguriert ist, dass sie die Pelletgröße verringert, und wobei jedes verarbeitete extrudierte Pellet (28a) mit verringerter Größe eine Dichte aufweist, die nicht größer ist als die Dichte der durch den Extruder (22) extrudierten Pellets (28a).

17. Verfahren nach Anspruch 6, wobei das Verarbeitungs-Teilsystem (36) für granulares Absorptionsmittel eine Pellet-Verarbeitungsmaschine aufweist, welche so konfiguriert ist, dass sie die Pelletgröße reduziert, und wobei jedes verarbeitete extrudierte Pellet (28a) mit verringerter Größe eine Dichte aufweist, die geringer ist als die Dichte der durch den Extruder (22) extrudierten Pellets (28a).

18. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen, gewellten Walzen (80, 82) aufweist, die im Allgemeinen parallel zueinander sind, sich zueinander drehen und einen Spalt zwischen den Walzen (80, 82) aufweist, und wobei der Spalt zwischen den Walzen (80, 82) während des Extruderbetriebs selektiv variiert wird, um eine Menge an Feinstoffen, die durch die oder während der Partikelgrößenreduzierung erzeugt werden, im Verhältnis zu einer Menge von (a) Partikeln kleinerer Größe, die kleiner sind als das extrudierte Pellet (28a), aus dem sie während der Partikelgrößenreduzierung gebildet wurden, aber größer als die während der Partikelgrößenreduzierung erzeugten Feinstoffe, und/oder (b) extrudierten Pellets (28a), deren Größe nicht durch die oder während der Partikelgrößenreduzierung verringert wurde, zu variieren.

19. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen, gewellten Walzen (80, 82) aufweist, die im Allgemeinen parallel zueinander sind, sich zueinander drehen und einen Spalt zwischen den Walzen (80, 82) aufweist, und wobei der Spalt zwischen den Walzen (80, 82) während des Extruderbetriebs dynamisch selektiv variiert wird, um eine Menge an Feinstoffen, die durch die oder während der Partikelgrößenreduzierung erzeugt werden im Verhältnis zu einer Menge von (a) Partikeln kleinerer Größe, die kleiner sind als das extrudierte Pellet (28a), aus dem sie während der Partikelgrößenreduzierung gebildet wurden, aber größer als die während der Partikelgrößenreduzierung erzeugten Feinstoffe und/oder (b) extrudierten Pellets (28a), deren Größe nicht durch die oder während der Partikelgrößenreduzierung verringert wurde, dynamisch zu variieren, um ein Verhältnis oder einen Gewichtsprozentbereich von Feinstoffen zu (a) und/oder (b) aufrecht zu erhalten, welches größer ist als ein gewünschtes Minimum oder innerhalb eines gewünschten Gewichtsprozentbereichs liegt.

20. Verfahren nach Anspruch 6, wobei das Verarbeitungs-Teilsystem (36) für granulares Absorptionsmittel einen Walzengranulator oder eine Granuliermühle (84) mit einem Paar von im Allgemeinen horizontalen, nebeneinander angeordneten, länglichen Pellet (28a)-Zerkleinerungswalzen (80, 82) aufweist, die im Allgemeinen parallel zueinander angeordnet sind, sich aufeinander zu drehen und einen Spalt zwischen den Walzen (80, 82) aufweisen, und wobei der Spalt zwischen den Walzen (80, 82) während des Extruderbetriebs dynamisch selektiv variiert wird, um eine Menge an Feinstoffen, welche durch die oder während der Partikelgrößenreduzierung erzeugt werden, im Verhältnis zu einer Gesamtmenge von (a) Partikeln kleinerer Größe, die kleiner sind als das extrudierte Pellet (28a), aus welchem sie während der Partikelgrößenreduzierung gebildet wurden, aber größer als die während der Partikelgrößenreduzierung erzeugten Feinstoffe, und (b) extrudierte Pellets (28a), deren Größe nicht durch die oder während der Partikelgrößenreduzierung verringert wurde, dynamisch zu variieren, um ein Verhältnis oder einen Gewichtsprozentbereich von Feinstoffen zu (a) und (b) aufrecht zu erhalten, welches größer als ein gewünschtes Minimum ist oder welches innerhalb eines gewünschten Gewichtsprozentbereichs liegt.

## Revendications

1. Système pour le traitement post-extrusion d'un absorbant granulaire extrudé, comprenant :
une extrudeuse (22) pour extruder des granulés d'absorbant granulaire ;
un sous-système de refroidissement et de séchage des absorbants granulaires (34) pour refroidir et sécher les granulés après l'extrusion sans augmenter la température des granulés extrudés ; et
un sous-système de traitement d'absorbant granulaire (36) pour traiter les granulés après que l'extrusion, le refroidissement et le séchage des granulés (28a) ont été effectués, le sous-système de traitement d'absorbant granulaire (36) comprenant un broyeur de granulés de type à cylindres rotatifs (65) qui réduit la taille des granulés extrudés refroidis et séchés (28a) pour former des granulés extrudés traités (28a),
**caractérisé en ce que** le broyeur de granulés de type à cylindres rotatifs (65) comporte une paire de cylindres ondulés de broyage de granulés (80, 82) allongés, généralement horizontaux et disposés côte à côte, qui sont généralement parallèles l'un à l'autre et tournent l'un vers l'autre, dans lequel un espacement entre les cylindres (80, 82) et un différentiel entre les vitesses de rotation des cylindres contrarotatifs (80, 82) déterminent une taille maximale de granulés à laquelle les granulés extrudés (28a) sont réduits en taille de particules, de ce fait.

2. Système selon la revendication 1, dans lequel le broyeur de granulés de type à cylindres rotatifs (65) est un granulateur à cylindres ou un broyeur de granulation (84) ayant des cylindres ondulés (80, 82) avec un espace entre eux dont l'espacement est sélectivement variable, contrôlant (a) une taille de particules plus finement dimensionnées et/ou (b) une quantité de particules plus finement dimensionnées produites pendant la réduction de taille de particules d'une pluralité de paires de granulés extrudés (28a) extrudés par au moins une extrudeuse (22).

3. Système de la revendication 1, dans lequel les cylindres (80, 82) ont un espace entre eux dont l'espacement est sélectivement variable, contrôlant (a) une taille de particules plus finement dimensionnées et/ou (b) une quantité de particules plus finement dimensionnées produites simultanément pendant la réduction de taille de particules d'une pluralité de paires de granulés extrudées (28a) extrudées simultanément par chacune d'au moins une pluralité d'extrudeuses (22).

4. Système selon la revendication 1, dans lequel les cylindres (80, 82) ont un espace entre eux dont l'espacement est sélectivement variable, contrôlant (a) une taille de particules plus finement dimensionnées et/ou (b) une quantité de particules plus finement dimensionnées produites simultanément pendant la réduction de taille de particules d'une pluralité de paires de granulés extrudées (28a) extrudées simultanément par chacune d'au moins une pluralité de paires d'extrudeuses (22).

5. Système de la revendication 1, dans lequel le broyeur de granulés de type à cylindres rotatifs (65) est un granulateur à cylindres ou un broyeur de granulation (84) équipé d'un premier et d'un deuxième cylindres ondulés de broyage de granulés allongés, côte à côte, généralement horizontaux (80, 82), le premier cylindre (80) étant ondulé longitudinalement et le deuxième cylindre (82) étant ondulé circonférentiellement.

6. Procédé de traitement post-extrusion d'un absorbant granulaire extrudé, comprenant :
(a) mise à disposition d'une extrudeuse (22) qui extrude des granulés (28a) d'absorbant granulaire à partir d'un mélange contenant de l'amidon, un dispositif de traitement à froid (32) configuré pour au moins refroidir ou sécher les granulés (28a) après l'extrusion, et un sous-système de traitement d'absorbant granulaire (36) selon la revendication 1 et configuré pour traiter les granulés extrudés (28a) après refroidissement et séchage d'une manière qui change au moins un paramètre ou une caractéristique des granulés (28a) ;
(b) application d'une pression et une température à un mélange contenant de l'amidon dans l'extrudeuse (22) pour gélatiniser au moins une partie de l'amidon dans le mélange et extruder le mélange contenant de l'amidon gélatinisé de l'extrudeuse (22) sous forme de granulés d'absorbant granulaires (28a) ;
(c) traitement à froid des granulés (28a) après l'extrusion par au le refroidissement et/ou le séchage des granulés (28a) lors de l'extrusion des granulés (28a) de l'extrudeuse (22) au niveau d'un sous-système de refroidissement et de séchage d'absorbant granulaire (34) ; et
(d) ensuite traitement des granulés extrudés (28a) d'une manière qui modifie au moins un paramètre ou une caractéristique des granulés au niveau du sous-système de traitement d'absorbant granulaire fourni (36) pour former des granulés extrudés traités (28a), dans lesquels les granulés extrudés traités (28a) ont une taille de particule maximale de 1,41 mm (tamis 14 US).

7. Procédé selon la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et qui ont un espace entre les cylindres (80, 82), et dans lequel le granulateur à cylindres ou le broyeur de granulation (84) réduit la taille des granulés extrudés refroidis et séchés (28a) sans compression ou compactage des granulés extrudés (28a) dont la taille est réduite par ou pendant la réduction de la taille des particules.

8. Procédé selon la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et qui ont un espace entre les cylindres (80, 82), et dans lequel les cylindres (80, 82) coupent chacun des granulés extrudés (28a) dont la taille de particule est réduite pendant la réduction de la taille des granulés.

9. Procédé selon la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et qui ont un espace entre les cylindres (80, 82), et dans lequel les cylindres (80, 82) cisaillent chacun des granulés extrudés (28a) dont la taille de particule est réduite pendant la réduction de la taille des granulés.

10. Procédé selon la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et qui ont un espace entre les cylindres (80, 82), et dans lequel les cylindres (80, 82) déchirent chacun des granulés extrudés (28a) dont la taille de particule est réduite pendant la réduction de la taille des granulés.

11. Procédé selon la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et qui ont un espace entre les cylindres (80, 82), et dans lequel les cylindres (80, 82) séparent chacun des granulés extrudés (28a) dont la taille de particule est réduite pendant la réduction de la taille des granulés.

12. Procédé selon la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et ont un espace entre les cylindres (80, 82), et dans lequel le granulateur à cylindres ou le broyeur de granulation (84) tord chacun des granulés extrudés (28a) dont la taille de particule est réduite pendant la réduction de la taille des granulés.

13. Procédé selon la revendication 6, dans lequel le sous-système de traitement d'absorbant granulaire (36) a une machine de traitement de granulés configurée pour réduire la taille des granulés, et dans lequel la température des granulés (28a) dont la taille est réduite par la machine de traitement n'est pas augmentée pendant l'engagement de la machine de traitement.

14. Procédé selon la revendication 6, dans lequel le sous-système de traitement d'absorbant granulaire (36) a une machine de traitement de granulés configurée pour réduire la taille des granulés qui forme à partir de ou de chaque granulé extrudé (28a) dont la taille est réduite par la machine de traitement au moins une (a) particule de plus petite taille ayant une taille inférieure à celle du granulé extrudé (28a) et une taille de particule maximale de 1.41 mm (tamis 14 US), et (b) au moins une particule plus finement dimensionnée ayant une taille inférieure à 1,41 mm (tamis 14 US).

15. Procédé selon la revendication 6, dans lequel le sous-système de traitement d'absorbant granulaire (36) a une machine de traitement de granulés configurée pour réduire la taille des granulés, et dans lequel une pluralité des granulés extrudés traités de taille réduite (28a) ont une densité qui n'est pas supérieure à une densité des granulés (28a) extrudés par l'extrudeuse (22).

16. Procédé selon la revendication 6, dans lequel le sous-système de traitement d'absorbant granulaire (36) a une machine de traitement de granulés configurée pour réduire la taille des granulés, et dans lequel chaque granulé extrudé traité de taille réduite (28a) a une densité qui n'est pas supérieure à une densité des granulés (28a) extrudés par l'extrudeuse (22).

17. Procédé selon la revendication 6, dans lequel le sous-système de traitement d'absorbant granulaire (36) a une machine de traitement de granulés configurée pour réduire la taille des granulés, et dans lequel chaque granulé extrudé traité de taille réduite (28a) a une densité qui est inférieure à une densité des granulés (28a) extrudés par l'extrudeuse (22).

18. Procédé selon la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et qui ont un espace entre les cylindres (80, 82), et dans lequel l'espace entre les cylindres (80, 82) est sélectivement modifié pendant le fonctionnement de l'extrudeuse pour faire varier une quantité de fines produites par ou pendant la réduction de la taille des particules par rapport à une quantité (a) des particules de taille plus petite, plus petites que le granulé extrudé (28a) à partir duquel elles ont été formées pendant la réduction de la taille des particules, mais plus grandes que les fines produites pendant la réduction de la taille des particules, et/ou (b) des granulés extrudés (28a) dont la taille n'a pas été réduite par ou pendant la réduction de la taille des particules.

19. Procédé de la revendication 6, dans lequel le sous-système de traitement d'absorbant granulaire (36) a un granulateur à cylindres ou un broyeur de granulation (84) ayant une paire de cylindres ondulés allongés (80, 82) généralement horizontaux, côte à côte, qui sont généralement parallèles l'un à l'autre, tournent l'un vers l'autre, et qui ont un espace entre les cylindres (80, 82), et dans lequel l'espace entre les cylindres (80, 82) est dynamiquement varié de manière sélective pendant le fonctionnement de l'extrudeuse pour faire varier dynamiquement une quantité de fines produites par ou pendant la réduction de la taille des particules par rapport à une quantité (a) des particules de taille plus petite que le granulé extrudé (28a) à partir duquel elles ont été formées pendant la réduction de la taille des particules mais plus grandes que les fines produites pendant la réduction de la taille des particules, et/ou (b) des granulés extrudés (28a) dont la taille n'a pas été réduite par ou pendant la réduction de la taille des particules pour maintenir un rapport et/ou une plage de pourcentage en poids de fines par rapport à (a) et/ou (b) supérieur à un minimum désiré ou dans une plage de pourcentage en poids désirée.

20. Procédé de la revendication 6, dans lequel le sous-système de traitement d'absorbant granulaire (36) a un granulateur à cylindres ou un broyeur de granulation (84) ayant une paire de cylindres de broyage de granulés (28a) allongés (80, 82) généralement horizontaux, côte à côte, qui sont généralement parallèles l'un à l'autre, tournent l'un vers l'autre, et qui ont un espace entre les cylindres (80, 82), et dans lequel l'espace entre les cylindres (80, 82) est dynamiquement varié de manière sélective pendant le fonctionnement de l'extrudeuse pour faire varier dynamiquement une quantité de fines produites par ou pendant la réduction de la taille des particules par rapport à une quantité totale (a) de particules de taille plus petite que le granulé extrudé (28a) à partir duquel elles ont été formées pendant la réduction de la taille des particules mais plus grande que les fines produites pendant la réduction de la taille des particules, et (b) de granulés extrudés (28a) dont la taille n'a pas été réduite par ou pendant la réduction de la taille des particules, afin de maintenir un rapport ou une plage de pourcentages en poids de fines par rapport à (a) et (b) qui est supérieur à un minimum souhaité ou qui se situe dans une plage de pourcentages en poids désirée.
